# EUROPÄISCHE PATENTSCHRIFT

(11) **EP 3 694 728 B1**
(45) Veröffentlichungstag und Bekanntmachung des Hinweises auf die Patenterteilung: **08.12.2021**
(21) Anmeldenummer: 18793364.3
(22) Anmeldetag: 08.10.2018
(51) Int. Cl.: B60B 11/10, B60B 15/26, B60C 17/04

(54) **NOTLAUFRAD**
EMERGENCY WHEEL
ROUE D'URGENCE

(30) Priorität: 10.10.2017 DE 102017123513
(43) Veröffentlichungstag der Anmeldung: 19.08.2020
(73) Patentinhaber: GV Engineering GmbH, 71296 Heimsheim (DE)
(72) Erfinder: TSIBERIDIS, Konstantin, 74199 Untergruppenbach (DE)
(74) Vertreter: Beyer, Andreas
(86) Internationale Anmeldenummer: PCT/EP2018/077353
(87) Internationale Veröffentlichungsnummer: WO 2019/072775

(56) Entgegenhaltungen:
- WO-A2-2006/123044
- US-A- 2 454 923
- US-A- 2 989 347
- US-A- 4 666 216
- US-A- 6 068 346
- US-B1- 6 217 125

## Beschreibung

Die vorliegende Erfindung betrifft einen Aufsatz für ein Fahrzeugrad zur Ermöglichung eines Fahrbetriebs bei eingeschränkter Reifenfunktion nach dem Oberbegriff des Anspruchs 1.

Die vorliegende Erfindung betrifft außerdem unabhängig davon ein System aus einem Aufsatz und einer Felge eines Fahrzeugrads nach Anspruch 17.

Ein entsprechender Aufsatz bzw. ein System aus einer Felge mit einem entsprechenden Aufsatz ist aus Dokument EP 2 048 003 A1 bekannt.

Mit einem Fahrzeugrad ist dabei ein Fahrzeugrad eines Kraftfahrzeugs gemeint. Unter einem Fahrbetrieb bei eingeschränkter Reifenfunktion ist dabei vorliegend ein Fahrbetrieb gemeint, bei dem der Reifen nicht mit seinen bei üblichen Straßenverhältnissen und üblichem Reifenzustand gegebenen Eigenschaften betreibbar ist. Damit kann beispielsweise eine Fahrt mit plattem Reifen gemeint sein oder auch der Betrieb des Fahrzeugs bei Eis- oder Schneeglätte. Bevorzugtes Einsatzgebiet der vorliegenden Erfindung ist die Ermöglichung einer Fahrt mit plattem Reifen.

Mit axialer Richtung ist vorliegend die Richtung der Drehachse des Fahrzeugrades gemeint. Mit der radialen Richtung ist die orthogonale Richtung zu dieser Drehachse des Fahrzeugrades gemeint. Der Reifen des Fahrzeugrades ist also von der Felge des Fahrzeugrades aus gesehen radial außenliegend angeordnet. Radial innenliegend ist beispielsweise ein Lochkreis der Felge mit einer Mittenöffnung des Fahrzeugrades, wobei vorliegend mit dem Lochkreis des Fahrzeugrades die Anordnung der Löcher in der Felge, die zur Aufnahme von Radschrauben bzw. Stehbolzen vorgesehen sind, samt Mittenöffnung gemeint ist. Mit Umfangsrichtung ist die Richtung entlang des Umfangs des Fahrzeugrades, also entlang seiner Lauffläche, gemeint.

Aufgabe der vorliegenden Erfindung ist es, einen Aufsatz für ein Fahrzeugrad bereitzustellen, der sich einfach und sicher montieren lässt, insbesondere soll der Aufsatz einer Fehlmontage vorbeugen. Eine weitere Aufgabe ist es, ein System aus einem Aufsatz und einer Felge bereitzustellen, das in einfacher und sicherer Weise eine Montage des Aufsatzes an der Felge erlaubt.

Diese Aufgabe wird durch einen Aufsatz gemäß Anspruch eins gelöst. Die weitere Aufgabe wird durch ein System gemäß Anspruch 17 gelöst.

Bei dem erfindungsgemäßen Aufsatz ist es also möglich, den Initialmontageabschnitt im Bereich des Lochkreises der Felge zu befestigen. Wie weiter unten noch im Detail ausgeführt werden wird, kann der Laufflächenabschnitt lösbar von dem Initialmontageabschnitt ausgebildet sein. Der Laufflächenabschnitt kann zusätzlich oder alternativ zu der Lösbarkeit auch verschiebbar und/oder verschwenkbar mit dem Initialmontageabschnitt verbunden sein.

Der Aufsatz kann bei der Montage in einem ersten Schritt mittels des Initialmontageabschnitts an der Felge des Fahrzeugrads in der oben beschriebenen Art und Weise befestigt werden. Gegebenenfalls kann der Aufsatz, insbesondere der Laufflächenabschnitt, dann zusätzlich in anderer Art und Weise am Fahrzeugrad bzw. der Felge des Fahrzeugrads befestigt werden.

Optional ist, wenn der Initialmontageabschnitt ausgebildet ist, um über einen formschlüssigen Hintergriff und/oder einen kraftschlüssigen Eingriff einer Greifeinrichtung mit einer, vorzugsweise kreisrunden, Öffnung in der Felge, die im Bereich des Lochkreises angeordnet ist, befestigt zu werden, wobei die Öffnung zu Löchern, die zur Aufnahme von Radschrauben bzw. Stehbolzen in der Felge vorgesehen sind, beabstandet in der Felge angeordnet ist, vorzugsweise wobei die Öffnung eine Mittenöffnung der Felge ist oder zu einer Drehachse der Felge beabstandet ist. Mit "im Bereich des Lochkreises angeordnet" ist dabei jedenfalls auch gemeint, dass sich die Öffnung von den Zwischenräumen zwischen den Speichen der Felge unterscheidet. Eine derartige Öffnung kann insbesondere eine sogenannte Polykontrollbohrung sein.

Die Greifeinrichtung kann beispielsweise, insbesondere wenn sie zum Eingriff in die Mittenöffnung der Felge ausgebildet ist, in Form einer geschlitzten Hülse ausgebildet sein. Im Innern der geschlitzten Hülse kann ein Element mit variierender radialer Erstreckung, insbesondere ein Konuselement, angeordnet sein, das gegenüber der geschlitzten Hülse in axialer Richtung bewegbar ist. Durch die axiale Bewegung des Elements kann die geschlitzte Hülse aufgespreizt werden, sodass sie in die Mittenöffnung kraftschlüssig eingreift. Das Element kann beispielsweise über eine Schraube in axialer Richtung gegenüber der gespreizten Hülse bewegbar sein. Mit der geschlitzten Hülse kann hierbei auch eine Mehrzahl an spreizbaren Armen gemeint sein.

Optional ist die Greifeinrichtung als Teil des Initialmontageabschnitts ausgebildet. Mit anderen Worten, sie kann unlösbar mit dem Initialmontageabschnitt verbunden sein.

Die Greifeinrichtung kann als ein, insbesondere stabartiger, Fortsatz ausgebildet sein, der einen Hakbereich umfassen kann, wobei der Fortsatz ausgebildet ist, um in die Öffnung eingeführt zu werden. Der Hakbereich kann beispielsweise ausfahrbar oder aufspreizbar ausgebildet sein, sodass er, wenn er durch die Öffnung durchgeführt ist, die Felge formschlüssig hintergreifen kann.

Der Hakbereich kann auch komprimierbar ausgebildet sein. Der Hakbereich kann dann beim Durchführen durch die Öffnung in seinem Durchmesser reduziert sein, und sich selbstständig aufweiten, wenn er durch die Öffnungen durchgeführt ist, sodass er die Felgen quasi automatisch hintergreifen kann. Hierzu kann der Hakbereich beispielsweise reversibel kompressibel, federnd und/oder federnd gelagert ausgebildet sein.

In einer Ausführungsform umfasst die Greifeinrichtung einen erweiterbaren Abschnitt, der ausgebildet ist, um die Öffnung im Bereich des Lochkreises zu hintergreifen. Ein derartiger erweiterbarer Abschnitt kann beispielsweise durch einen Hakbereich, der aufspreizbar ausgebildet ist, gebildet sein. Beispielsweise kann die Greifeinrichtung zwei Hakarme umfassen, die sich bspw. durch Einschrauben eines Spreizelements, bspw. einer Schraube, voneinander weg bewegen und damit aufspreizen lassen.

Die Greifeinrichtung kann insbesondere auch hohlstiftartig ausgebildet sein, wobei sie im Inneren ein Spreizelement, insbesondere einen aufweitenden Stift, umfassen kann, der durch Bewegung in axialer Richtung den erweiterbaren Abschnitt aufweitet. An dem Initialmontageabschnitt sind vorzugsweise mehrere Greifeinrichtungen angeordnet. Sind die Greifeinrichtungen bspw. wie eben beschrieben hohlstiftartig ausgebildet, so können die gegebenenfalls vorhandenen aufweitenden Stifte bzw. Spreizelemente miteinander verbunden sein und beispielsweise durch eine, bspw. als Schraube ausgebildete, Betätigungseinheit in axialer Richtung gemeinsam bewegbar sein, um die erweiterbaren Abschnitte aufzuweiten.

Ein Betätigungsteil kann bspw. mit kreissegmentförmigen Schlitzen, die auf rampenartigen Erhebungen laufen, versehen sein. Durch ein Verdrehen des Betätigungsteil werden die Spreizelemente durch ein Gleiten entlang der rampenartigen Erhebungen in den Greifeinrichtungen bewegt, wodurch diese aufgespreizt werden. Die Verdrehung des Betätigungsteils kann bspw. über entsprechende Handgriffe manuell vorgenommen werden.

Allgemein kann das Betätigungsteil ausgebildet sein, um durch eine Bewegung des Betätigungsteils gegenüber dem übrigen Initialmontageabschnitt eine Bewegung der Spreizelemente hervorrufen zu können.

Optional ist, wenn der Initialmontageabschnitt ausgebildet ist, um über eine Klemmeinrichtung an Radschrauben des Fahrzeugrads befestigt zu werden, wobei die Klemmeinrichtung ausgebildet ist, um klemmend an einer Radschraube anzugreifen und diese zu fassen oder um klemmend an wenigstens zwei, vorzugsweise sämtlichen, Radschrauben gemeinsam anzugreifen und diese zu fassen.

Falls die Klemmeinrichtung ausgebildet ist, um klemmend an einer Radschraube anzugreifen und diese zu fassen, so kann die Klemmeinrichtung ausgebildet sein, um, beispielsweise über eine in ihrem Radius veränderbare Hülse, an einer Radschraube bzw. an mehreren Radschrauben jeweils einzeln anzugreifen und diese zu fassen. Die in ihrem Radius veränderbare Hülse ist hierbei lediglich eine beispielhafte Ausführung der Klemmeinrichtung. Die im Radius veränderbare Hülse kann auf den Schraubenkopf einer Radschraube aufgesetzt werden und der Radius der Hülse kann dann verringert werden, wodurch die Radschraube gefasst wird. Eine derartige Veränderbarkeit im Radius kann beispielsweise durch Schlitze in der Hülse realisiert sein, wobei die einzelnen durch Schlitze beabstandeten Teile der Hülse aufeinander zubewegbar bzw. biegbar sind, sie bilden quasi schwenkbare bzw. biegbare Arme. Falls die Klemmeinrichtung ausgebildet ist, um klemmend an einer einzelnen Radschraube anzugreifen und diese zu fassen, so kann sie auch ausgebildet sein, um in eine Öffnung im Kopf der Radschraube eingesetzt zu werden und in dieser Öffnung auf gespreizt werden, sodass sie sich in der Öffnung verklemmt. Es kann für jede Radschraube einer der eben beschriebenen Klemmeinrichtungen vorgesehen sein, die an einer einzelnen Radschraube angreifen und diese fassen.

Falls die Klemmeinrichtung ausgebildet ist, um klemmend an wenigstens zwei Radschrauben gemeinsam anzugreifen und diese zu fassen, so kann die Klemmeinrichtung ausgebildet sein, um, beispielsweise über eine in ihrem Radius veränderbare Hülse, an mehreren Radschrauben gemeinsam anzugreifen und diese zu fassen. Die in ihrem Radius veränderbare Hülse ist hierbei lediglich eine beispielhafte Ausführung der Klemmeinrichtung. Die im Radius veränderbare Hülse ist dabei typischerweise derart weit ausgeführt, dass sie über die Schraubenköpfe aller Radschrauben gestülpt werden kann und der Radius der Hülse dann verringert werden kann, wodurch die Radschrauben gefasst werden. Die Hülse klemmt dann gegen die radial außen liegenden Seiten der Radschrauben. Die Klemmeinrichtung kann auch ein spreizbares Element umfassen, dass zwischen den Radschrauben angeordnet wird und dann aufgespreizt wird um von radial innen die Radschrauben zu kontaktieren und sich auf diese Weise zwischen den Radschrauben zu verspannen bzw. an diesen anzugreifen und sie zu fassen. Die Klemmeinrichtung kann auch wenigstens zwei, vorzugsweise jedoch für jede Radschraube ein, Befestigungselement umfassen. Das Befestigungselement kann ausgebildet sein, um in eine Öffnung im Kopf der Radschraube eingesetzt zu werden. Es ist auch möglich, dass das Befestigungselement ausgebildet ist, um auf den Kopf einer Radschraube aufgesetzt zu werden, wobei das Befestigungselement mit dem Abschnitt, der den Schraubenkopf aufnimmt, komplementär zur Außenkontur (üblicherweise ein Sechskant) des Kopfes der Radschraube ausgebildet sein kann, oder der Abschnitt des Befestigungselements, der den Schraubenkopf aufnimmt, weist auf seiner Innenseite längst riefen auf, um eine Verdrehung des Befestigungselements gegenüber dem Schraubenkopf zu verhindern. Die Klemmeinrichtung kann eine Biegeeinrichtung umfassen, die ausgebildet ist, um wenigstens zwei Befestigungselemente, vorzugsweise sämtliche Befestigungselemente aufeinander zu oder voneinander weg zu biegen, wenn sie auf den Kopf der Radschraube aufgesetzt oder in die Öffnung im Kopf der Radschraube eingesetzt sind. Durch dieses aufeinander zu oder voneinander weg Biegen der Befestigungselemente werden die Befestigungselemente gegeneinander verspannt. Die Klemmeinrichtung greift hierdurch klemmend an den Radschrauben gemeinsam an und fasst diese klemmend.

Die Biegeeinrichtung kann derart ausgebildet sein, dass sie, bspw. mittels einer Schraube, in axialer Richtung beweglich gegenüber dem Initialmontageabschnitt ist und beim axialen heranbewegen an den oder wegbewegen von dem Initialmontageabschnitt die Befestigungselemente aufeinander zu oder voneinander weg biegt. Dies kann beispielsweise über eine abgeschrägte Fläche an der Biegeeinrichtung erreicht werden. Denkbar ist auch, wenn die Biegeeinrichtung in Form eines Spannrings ausgebildet ist. Denkbar ist, dass die Biegeeinrichtung über eine Feder zum Initialmontageabschnitt hin bzw. von diesem weg gespannt ist und über eine Schraube entgegen der Spannrichtung der Feder bewegt werden kann.

Die Biegeeinrichtung kann auch ein plattenförmiges Element mit insgesamt von einer Kreisbahn abweichenden kreisbogenförmigen Schlitzen umfassen. Die derartige Biegeeinrichtung kann mit den Schlitzen derart platziert werden, dass die Befestigungselemente sich durch die Schlitze erstrecken. Ein Verdrehen der Biegeeinrichtung führt dann, je nach Richtung in der die Schlitze insgesamt von der Kreisbahn abweichen, zu einem voneinander weg oder aufeinander zu biegen der Befestigungselemente.

Wie bereits oben erwähnt, ist es optional, wenn der Laufflächenabschnitt lösbar von dem Initialmontageabschnitt ausgebildet ist. Der Initialmontageabschnitt kann dann an der Felge des Fahrzeugrads befestigt werden und anschließend kann der Laufflächenabschnitt an dem Initialmontageabschnitt befestigt werden. Bevorzugt ist dabei, wenn der Laufflächenabschnitt einen Verbindungsabschnitt, der sich vorzugsweise über den Bereich des Lochkreises erstreckt, wenn der Laufflächenabschnitt am Initialmontageabschnitt befestigt ist, aufweist, der ausgebildet ist, um in axialer Richtung gesehen mit dem Initialmontageabschnitt zu überlappen, sodass der Laufflächenabschnitt in einfacher Weise mit dem Initialmontageabschnitt beispielsweise durch Verschrauben verbunden werden kann.

Denkbar ist auch, wenn der Laufflächenabschnitt in axialer Richtung verschieblich und/oder verschwenkbar mit dem Montageabschnitt verbunden ist. Der Initialmontageabschnitt kann dann an der Felge des Fahrzeugrads befestigt werden und anschließend kann der Laufflächenabschnitt zur Felge hin geschoben und/oder geschwenkt werden. Vorzugsweise kann er dann gegenüber dem Montageabschnitt fixiert bzw. verriegelt werden.

Optional ist, wenn der Laufflächenabschnitt über eine Befestigungseinrichtung am Initialmontageabschnitt, insbesondere lösbar, befestigbar oder unlösbar befestigt ist, wobei die Befestigungseinrichtung derart ausgebildet ist, dass sich der Laufflächenabschnitt beim Befestigen an dem Initialmontageabschnitt in einer axialen Richtung zur Felge hin bewegt. Beispielsweise kann die Befestigungseinrichtung in Form einer stegartigen Strebe und Schrauben ausgebildet sein, wobei die Strebe am Laufflächenabschnitt vorgesehen ist, und beispielsweise Öffnungen zur Aufnahme von Schrauben aufweist, die in den Initialmontageabschnitt eingeschraubt werden können. Der Laufflächenabschnitt kann also an den Initialmontageabschnitt angeschraubt werden, wobei beim Anziehen der Schrauben der Laufflächenabschnitt sich zur Felge hin bewegt.

Optional ist, wenn der Laufflächenabschnitt derart mit dem Initialmontageabschnitt verbunden oder verbindbar ist, dass er über eine, vorzugsweise pneumatische und/oder federvorgespannte, Betätigungseinrichtung in axialer Richtung gegenüber dem Initialmontageabschnitt bewegbar ist. Eine derartige Bewegbarkeit ist, insbesondere in Kombination mit einem der Felge zugewandten Kontaktabschnitt am Laufflächenabschnitt, wie er später erläutert wird, vorteilhaft. Insbesondere ist es vorteilhaft, wenn der Laufflächenabschnitt durch die Betätigungseinrichtung translatorisch in axialer Richtung zum Initialmontageabschnitt hin bewegbar ist. Beispielsweise kann die Betätigungseinrichtung in Form eines Druckzylinders ausgebildet sein, der mit einem Druckmittel beaufschlagbar ist, um den Laufflächenabschnitt gegenüber dem Initialmontageabschnitt zu bewegen.

Optional ist, wenn der Laufflächenabschnitt, insbesondere in einer Umfangsrichtung, mehrteilig ausgebildet ist, vorzugsweise wobei der Laufflächenabschnitt, wenigstens zwei, insbesondere voneinander lösbare und/oder zueinander verschwenk- oder verschiebbare umfängliche Segmente umfasst. Hierdurch kann die Montage des Aufsatzes am Fahrzeugrad erleichtert werden.

Im Sinne der vorliegenden Erfindung ist auch, wenn der Laufflächenabschnitt ein erstes umfängliches Segment, vorzugsweise mit einer umfänglichen Erstreckung von mehr als 180°, insbesondere von mehr als 190°, und ein zweites umfängliches Segment umfasst, wobei das zweite umfängliche Segment mit dem ersten umfänglichen Segment lösbar oder verschwenkbar oder verschieblich verbunden ist. Hierdurch lässt sich der Aufsatz besonders einfach am Fahrzeugrad anbringen. Bei der Montage kann dann bspw. zunächst der Initialmontageabschnitt am Fahrzeugrad befestigt werden. Daraufhin kann der Laufflächenabschnitt bzw. ein umfängliches Segment des Laufflächenabschnitts an dem Initialmontageabschnitt befestigt werden. Wenn bspw. die beiden Segmente gegenüber einander verschwenkbar sind, so kann bei der Montage zunächst das zweite umfängliche Segment auf das erste umfängliche Segment geschwenkt bleiben, wenn das erste umfängliche Segment am Fahrzeugrad bzw. an dem Initialmontageabschnitt angebracht ist, so kann das Fahrzeugrad bewegt werden, sodass das erste umfängliche Segment mit seiner Lauffläche in Kontakt mit der Fahrbahn gelangt. Das zweite umfängliche Segment kann anschließend in einfacher Weise nach oben geschwenkt werden und vorzugsweise über einen Verriegelungsmechanismus in der für den Betrieb vorgesehenen Stellung verriegelt werden.

Optionaler Weise ist das zweite umfängliche Segment gegenüber dem ersten umfänglichen Segment über eine, vorzugsweise schwenkbar ausgebildete, Ausrichteinrichtung ausrichtbar. Diese Ausrichteinrichtung kann den oben genannten Verriegelungsmechanismus bilden.

Die umfängliche Erstreckung des ersten umfänglichen Segments von mehr als 180° bzw. mehr als 190° hat den Vorteil, dass das erste umfängliche Segment den überwiegenden Teil des Aufsatzes in umfänglicher Richtung bildet und damit in einfacher Weise stabil und fest am Fahrzeugrad angebracht werden kann. Insbesondere kann das erste umfängliche Segment kreisbogenartig ausgebildet sein und vorzugsweise eine kreissehnenartig verlaufende Strebe umfassen. Hierdurch ist eine besonders hohe Stabilität und einfache Anbringung des Aufsatzes am Fahrzeugrad gegeben. Ein derartiger Aufsatz mit einem ersten umfänglichen Segment und einem zweiten umfänglichen Segment kann auch Kontaktabschnitte umfassen, die der Felge zugewandt angeordnet sind.

Optional kann der Laufflächenabschnitt einen in Umfangsrichtung durchgängig ausgebildeten Innenabschnitt umfassen, der radial innen liegend von einem Außenabschnitt angeordnet ist, wobei der Außenabschnitt in Umfangsrichtung mit einer Unterbrechung ausgebildet ist, und wobei der Außenabschnitt weiterhin einen Einsatzabschnitt umfasst, der, wenn der Aufsatz im am Fahrzeugrad montierten Zustand ist, in der Unterbrechung derart aufgenommen ist, dass der Außenabschnitt eine geschlossene kreisförmige Lauffläche aufweist. Da der Außenabschnitt die Unterbrechung in umfänglicher Richtung aufweist, ist es möglich den Initialmontageabschnitt und den Laufflächenabschnitt ohne Einsatzabschnitt am Fahrzeugrad anzubringen ohne das Fahrzeugrad vom Fahrzeug zu entfernen oder das Fahrzeug mit einem Wagenheber anzuheben. Hierzu kann der Initialmontageabschnitt beispielsweise in einer der oben beschriebenen Weisen Fahrzeugrad befestigt werden. Anschließend wird die Unterbrechung im Außenabschnitt des Laufflächenabschnitts zum Boden hin ausgerichtet und der Laufflächenabschnitt an dem Initialmontageabschnitt befestigt. Wenn der Initialmontageabschnitt und der Laufflächenabschnitt am Fahrzeugrad angebracht sind, kann das Fahrzeug geringfügig bewegt werden. Die Unterbrechung bewegt sich dann, durch die Drehung des Fahrzeugrades, von der Ausrichtung zum Boden hin weg. Beispielsweise kann das Fahrzeug um eine halbe Drehung des Fahrzeugrads nach vorn bewegt werden, die Unterbrechung ist dann nicht mehr zur Fahrbahn hin ausgerichtet, sondern zeigt nach oben. Nun kann der Einsatzabschnitt in die Unterbrechung eingesetzt bzw. aufgenommen werden. Der Aufsatz weist dann eine in umfänglicher Richtung geschlossene kreisförmige Lauffläche auf. Die Montage des Aufsatzes kann dann abgeschlossen sein oder der Aufsatz kann noch über zusätzliche Mittel (bspw. Spannmittel) weiter am Fahrzeugrad befestigt werden.

Optional ist, wenn der Laufflächenabschnitt wenigstens ein, vorzugsweise mehrere, Spannmittel umfasst, das ausgebildet ist, um mit einem Hakabschnitt einen Abschnitt, insbesondere ein Felgenhorn, der Felge des Fahrzeugrads zu hintergreifen. Hierdurch kann der Laufflächenabschnitt in besonders sicherer Weise am Fahrzeugrad befestigt werden.

Optional ist, wenn der Aufsatz einen Verspannmechanismus mit einem Kontaktabschnitt umfasst, der ausgebildet ist, um das Spannmittel zu betätigen und den Hakabschnitt in Hintergriff mit dem Abschnitt der Felge, vorzugsweise dem Felgenhorn, zu bringen, wenn der Kontaktabschnitt, betätigt, insbesondere mit Druck beaufschlagt, wird. Hierdurch kann der Hintergriff mit dem Felgenhorn in einfacher Weise herbeigeführt werden.

Optional ist, wenn der Verspannmechanismus ausgebildet ist, um mit dem Kontaktabschnitt bei am Fahrzeugrad angebrachtem Aufsatz und sich drehendem Fahrzeugrad die Fahrbahn zu kontaktieren und dadurch den Kontaktabschnitt zu betätigen, insbesondere mit Druck zu beaufschlagen, vorzugsweise wobei der Kontaktabschnitt räumlich, insbesondere in axialer Richtung gesehen, in der Lauffläche des Aufsatzes angeordnet ist und vorzugsweise wobei der Kontaktabschnitt in einem ausgefahrenen Zustand in Umfangsrichtung absatzfrei mit der Lauffläche des Aufsatzes verläuft. Durch Drehung des Fahrzeugrades mit angebrachtem Aufsatz werden hierdurch eine Betätigung der Spannmittel und damit ein Hintergreifen des Felgenhorns sichergestellt.

Der Kontaktabschnitt kann über eine Druckübertragungseinrichtung mit einer Freilaufeinrichtung mit dem Spannmittel verbunden sein. Die Freilaufeinrichtung ist ausgebildet, um eine Bewegung des Kontaktabschnitts zu ermöglichen ohne, dass sich das Spannmittel weiter bewegt. Damit wird verhindert, dass wenn das Spannmittel ausreichend bewegt wurde, bzw. in die vorgesehene Position bewegt wurde, der Kontaktabschnitt nicht weiter Druck auf das Spannmittel ausübt.

Die Druckübertragungseinrichtung mit oder ohne die Freilaufeinrichtung kann auch einen Haltemechanismus umfassen. Der Haltemechanismus ist dabei derart ausgebildet, dass er verhindert, dass die Spannmittel sich aus ihrem Hintergriff mit dem Abschnitt der Felge bzw. dem Felgenhorn bewegen, wenn der Kontaktabschnitt nicht mehr Druck beaufschlagt wird.

Der Verspannmechanismus kann ausgebildet sein, um mit dem Kontaktabschnitt das Fahrzeugrad, insbesondere die Felge, oder den Initialmontageabschnitt zu kontaktieren, wenn der Laufflächenabschnitt am Initialmontageabschnitt befestigt wird, und dadurch den Kontaktabschnitt zu betätigen, insbesondere mit Druck zu beaufschlagen, vorzugsweise wobei der Kontaktabschnitt auf der der Felge zugewandten Seite des Aufsatzes angeordnet ist.

Optional ist, wenn der Hakabschnitt des Spannmittels in axialer Richtung gesehen nach radial innen, vorzugsweise linear oder bogenförmig, abfallend ausgebildet ist, wobei das Spannmittel derart ausgebildet ist, dass sich der Hakabschnitt nach radial innen bewegt, insbesondere verschiebt, wenn das Spannmittel betätigt wird und das Spannmittel sich auf die Felge, insbesondere auf das Felgenhorn, zubewegt, und dass durch die Bewegung des Hakabschnitts der Laufflächenabschnitt in axialer Richtung zur Felge hin gedrängt wird. Hierdurch zieht sich beim Hintergreifen des Felgenhorns durch die Spannmittel der Laufflächenabschnitt gegen die Felge und eine besonders sichere Befestigung des Laufflächenabschnitts wird sichergestellt.

Optional ist, wenn der Aufsatz eine Reifenverdrängeinrichtung umfasst, die ausgebildet ist, um den Reifen beim Anbringen des Aufsatzes, und/oder beim Befestigen des Laufflächenabschnitts an dem Initialmontageabschnitt und/oder beim Betätigen des Spannmittels in axialer Richtung vom Felgenhorn weg zu drängen. Hierdurch haben die Spannmittel freien Zugriff auf das Felgenhorn.

Optional ist, wenn die Reifenverdrängeinrichtung gesondert von dem Spannmittel ausgebildet ist. Denkbar ist auch, dass die Reifenverdrängeinrichtung durch das Spannmittel bzw. einen Abschnitt des Spannmittels ausgebildet ist bzw. diesen umfasst.

Optional ist, wenn der Aufsatz eine Spannmittelverriegelungseinrichtung umfasst, die in eine Sicherungsposition bewegbar ist und ausgebildet ist, um in der Sicherungsposition das Spannmittel derart, insbesondere durch eine formschlüssige Verriegelung, zu verriegeln, dass der Hakabschnitt nicht aus seinem Hintergriff mit dem Abschnitt der Felge (des Fahrzeugrads bewegbar ist, solange die Spannmittelverriegelungseinrichtung in der Sicherungsposition ist.

Optional ist, wenn die Spannmittelverriegelungseinrichtung derart ausgebildet und gegenüber dem Spannmittel angeordnet ist, dass die Spannmittelverriegelungseinrichtung, wenn sie in die Sicherungsposition bewegt wird, den Hakabschnitt des Spannmittels, der sich im Hintergriff mit dem Abschnitt der Felge befindet, zusätzlich gegen den Abschnitt der Felge spannt.

Bevorzugt ist, wenn die Spannmittelverriegelungseinrichtung eine bewegbare Spannfläche aufweist, die ausgebildet und angeordnet ist, um einen, vorzugsweise vorsprungartig, insbesondere zapfenartig, ausgebildeten Abschnitt des Spannmittels zu hintergreifen und derart mit Druck zu beaufschlagen, dass der Hakabschnitt des Spannmittels in die Hintergriffstellung mit dem Abschnitt der Felge des Fahrzeugrads gedrängt wird bzw. in diesem Hintergriff verspannt wird, wenn die Spannmittelverriegelungseinrichtung in die Sicherungsposition bewegt wird.

Vorzugsweise ist die Spannmittelverriegelungseinrichtung mit einem Betätigungsabschnitt derart gekoppelt, dass die Spannmittelverriegelungseinrichtung bei Betätigung, insbesondere Druckbeaufschlagung, des Betätigungsabschnitts in die Sicherungsposition bewegt wird.

Vorzugsweise ist der Betätigungsabschnitt in der Lauffläche angeordnet.

Vorzugsweise weißt der Betätigungsabschnitt eine Kontaktfläche auf, die aus einem Gummimaterial besteht oder ein Gummimaterial umfasst. Vorzugsweise ist Kontaktfläche in der Lauffläche angeordnet und derart ausgebildet, dass sie beim Kontakt mit der Fahrbahn derart verschleißt, dass sie bündig mit der Lauffläche verläuft.

Obenstehend wurden Spannmittel, der Verspannmechanismus sowie die Spannmittelverriegelungseinrichtung in verschiedenen Ausbildungen beschrieben. Diese Ausführungen beziehen sich auf die bisher beschriebenen Ausführungsformen des erfindungsgemäßen Aufsatzes.

Denkbar ist auch ein Aufsatz, der einen Grundkörper mit einer Lauffläche aufweist, wobei der Aufsatz zusätzlich eine oder mehrere Ausführungsformen der bisher beschriebenen Spannmittel, insbesondere und eine oder mehrere Ausführungsformen des Verspannmechanismus, vorzugsweise und eine oder mehrere Ausführungsformen der Spannmittelverriegelungseinrichtung umfasst. Ein derartiger Aufsatz muss also nicht zwingend den Laufflächenabschnitt und den Initialmontageabschnitt der bisher beschriebenen Ausführungsformen umfassen. Insbesondere ist eine eigenständige Erfindung, ein Aufsatz, der einen Grundkörper mit einer Lauffläche aufweist, wobei der Aufsatz ein, vorzugsweise mehrere, Spannmittel umfasst, das ausgebildet ist, um mit einem Hakabschnitt einen Abschnitt, insbesondere ein Felgenhorn, der Felge des Fahrzeugrads zu hintergreifen, vorzugsweise wobei der Aufsatz einen Verspannmechanismus mit einem Kontaktabschnitt umfasst, der ausgebildet ist, um das Spannmittel zu betätigen und den Hakabschnitt in Hintergriff mit dem Abschnitt der Felge, vorzugsweise dem Felgenhorn, zu bringen, wenn der Kontaktabschnitt, betätigt, insbesondere mit Druck beaufschlagt, wird, vorzugsweise wobei der Verspannmechanismus ausgebildet ist, um mit dem Kontaktabschnitt das Fahrzeugrad, insbesondere die Felge, oder den Initialmontageabschnitt zu kontaktieren, wenn der Laufflächenabschnitt am Initialmontageabschnitt befestigt wird, und dadurch den Kontaktabschnitt zu betätigen, insbesondere mit Druck zu beaufschlagen, vorzugsweise wobei der Kontaktabschnitt auf der der Felge zugewandten Seite des Aufsatzes angeordnet ist, vorzugsweise wobei der Hakabschnitt des Spannmittels in axialer Richtung gesehen nach radial innen, vorzugsweise linear oder bogenförmig, abfallend ausgebildet ist, wobei das Spannmittel derart ausgebildet ist, dass sich der Hakabschnitt nach radial innen bewegt, insbesondere verschiebt, wenn das Spannmittel betätigt wird und das Spannmittel sich auf die Felge, insbesondere auf das Felgenhorn, zubewegt, und dass durch die Bewegung des Hakabschnitts der Aufsatz in axialer Richtung zur Felge hin gedrängt wird, vorzugsweise wobei der Aufsatz eine Spannmittelverriegelungseinrichtung umfasst, die in eine Sicherungsposition, insbesondere manuell und/oder über einen Betätigungsabschnitt, der vorzugsweise ausgebildet und angeordnet ist, um im montierten Zustand des Aufsatzes die Fahrbahn zu kontaktieren, bewegbar ist und ausgebildet ist, um in der Sicherungsposition das Spannmittel derart, insbesondere durch eine formschlüssige Verriegelung, zu verriegeln, dass der Hakabschnitt nicht aus seinem Hintergriff mit dem Abschnitt der Felge des Fahrzeugrads bewegbar ist, solange die Spannmittelverriegelungseinrichtung in der Sicherungsposition ist, vorzugsweise wobei die Spannmittelverriegelungseinrichtung derart ausgebildet und gegenüber dem Spannmittel angeordnet ist, dass die Spannmittelverriegelungseinrichtung, wenn sie in die Sicherungsposition bewegt wird, den Hakabschnitt des Spannmittels, der sich im Hintergriff mit dem Abschnitt der Felge befindet, zusätzlich gegen den Abschnitt der Felge spannt. Ein derartiger Aufsatz ist besonders sicher am Fahrzeugrad befestigbar.

Im Sinne der Erfindung ist auch ein System aus einem Aufsatz und einer Felge eines Fahrzeugrads, wobei der Aufsatz gemäß einer oder mehreren der vorangegangenen Ausführungsformen ausgebildet ist und die Felge wenigstens eine Öffnung, vorzugsweise mehrere Öffnungen, aufweist, die im Bereich des Lochkreises in der Felge angeordnet ist bzw. sind, und wobei die Öffnung (bzw. Öffnungen) zu den Löchern, die zur Aufnahme von Radschrauben bzw. Stehbolzen vorgesehen sind, vorzugsweise und zu der Mittenöffnungen der Felge, beabstandet angeordnet ist bzw. sind. Dabei unterscheiden sich die Öffnung bzw. die Öffnungen von den Zwischenräumen zwischen den Speichen der Felge. Vorzugsweise sind die Öffnungen so genannte Polykontrollbohrungen.

Optional ist bei dem System, dass Mittelpunkte der Öffnungen beabstandet, vorzugsweise nach radial außen beabstandet, zu einem Kreis angeordnet sind, der durch Mittelpunkte der Löcher, die zur Aufnahme von Radschrauben bzw. Stehbolzen vorgesehen sind, verläuft und/oder dass die Mittelpunkte der Öffnungen beabstandet, vorzugsweise nach radial innen beabstandet, zu einem Kreis angeordnet sind, der den kleinsten Kreis bildet, der sämtliche Löcher, die zur Aufnahme von Radschrauben bzw. Stehbolzen vorgesehen sind, umschreibt.

Bei den bisher beschriebenen Ausführungsformen kann der Aufsatz, insbesondere der Laufflächenabschnitt, eine Reifenfasseinrichtung umfassen, die ausgebildet ist, um in den Reifen des Fahrzeugrads einzugreifen und das Reifenmaterial zu klemmen oder zu durchdringen. Hierdurch kann der Reifen am Aufsatz, insbesondere am Laufflächenabschnitt, befestigt werden und vor einem Abfallen während der Fahrt gesichert werden.

Denkbar ist auch ein Aufsatz für ein Fahrzeugrad zur Ermöglichung eines Fahrbetriebs bei eingeschränkter Reifenfunktion mit einem Laufflächenabschnitt, der eine Lauffläche des Aufsatzes umfasst, wobei der Aufsatz wenigstens eine Reifenfasseinrichtung umfasst, die ausgebildet ist, um in den Reifen des Fahrzeugrads einzugreifen und das Reifenmaterial zu klemmen oder zu durchdringen. Vorzugsweise weist die Reifenfasseinrichtung hierzu zahnartige Vorsprünge auf, die ausgebildet sind, um in das Material des Reifens einzudringen.

Hierdurch kann der Aufsatz direkt am Reifen des Fahrzeugrads befestigt werden.

Denkbar ist weiterhin, dass ein Ringelement vorgesehen ist, dass zunächst am Reifen über die Reifenfasseinrichtung befestigt wird, wobei das Ringelement vorzugweise einen kleineren Durchmesser als der Reifen hat. Anschließend kann an dem Ringelement ein Laufflächenabschnitt wie eingangs beschrieben angeordnet werden. Das über die Reifenfasseinrichtung befestigte Ringelement kann damit in einer gesonderten Erfindung einen Ersatz des Initialmontageabschnitts bilden.

Denkbar ist auch, dass zusätzlich oder alternativ zu der Reifenfasseinrichtung Saugelemente, oder Klebelemente verwendet werden. Denkbar ist auch die Verwendung von chemischen Befestigungselementen, die derart ausgebildet sind, dass sie über eine chemische Reaktion mit dem Material des Reifens eine stoffschlüssige Verbindung mit dem Reifen bilden.

Diese können dazu dienen bei den oben beschriebenen Varianten den Aufsatz zusätzlich zu befestigen und/oder um den Reifen gegen ein Abfallen während der Fahrt zu sichern.

Denkbar ist auch, dass ein Ringelement vorgesehen ist, dass zunächst am Reifen über die Saugelemente, chemische Befestigungselemente und/oder Klebelemente befestigt wird, wobei das Ringelement vorzugweise einen kleineren Durchmesser als der Reifen hat. Anschließend kann an dem Ringelement ein Laufflächenabschnitt wie eingangs beschrieben angeordnet werden. Das über die Reifenfasseinrichtung befestigte Ringelement kann damit in einer gesonderten Erfindung einen Ersatz des Initialmontageabschnitts bilden.

Weitere Merkmale, Anwendungsmöglichkeiten und Vorteile der Erfindung ergeben sich aus der nachfolgenden Beschreibung von Ausführungsbeispielen der Erfindung, die anhand der Zeichnung erläutert werden, wobei die Merkmale sowohl in Alleinstellung als auch in unterschiedlichen Kombinationen für die Erfindung wesentlich sein können, ohne dass hierauf nochmals explizit hingewiesen wird. Es zeigen:
Figur 1 ein Fahrzeugrad beim Blick in einer axialen Richtung;
Figur 2 eine Schnittdarstellung der Felge des Fahrzeugrads aus Figur 1;
Figur 3 eine erste Ausführungsform eines erfindungsgemäßen Aufsatzes;
Figur 4 Eine Montage des Aufsatzes aus Figur 3;
Figur 5 ein Spannmittel;
Figur 6 eine weitere Ausführungsform eines erfindungsgemäßen Aufsatzes in einer perspektivischen Darstellung;
Figur 7 eine weitere Ausführungsform eines erfindungsgemäßen Aufsatzes;
Figur 8 eine weitere Ausführungsform eines erfindungsgemäßen Aufsatzes;
Figur 9 der Aufsatz aus Figur 8 in einer zusammengesetzten Konfiguration;
Figur 10 ein Verspannmechanismus;
Figur 11 eine Befestigung eines Initialmontageabschnitts mittels einer Greifeinrichtung;
Figur 12 eine weitere Alternative einer Befestigung eines Initialmontageabschnitts mittels einer Greifeinrichtung;
Figur 13 eine weitere Alternative einer Befestigung eines Initialmontageabschnitts mittels einer Greifeinrichtung;
Figur 14 eine Felge eines erfindungsgemäßen Systems;
Figur 15 einen Initialmontageabschnitt;
Figur 16 verschiedene Varianten eines Initialmontageabschnitts;
Figur 17 einen Initialmontageabschnitt zur Befestigung über eine Mittenöffnung;
Figur 18 verschiedene Ausführungsformen für Greifeinrichtungen;
Figur 19 einen Initialmontageabschnitt mit einer Biegeeinrichtung;
Figur 20 verschiedene mögliche Varianten eines Befestigungselements;
Figur 21 eine Möglichkeit zur Verbindung zwischen dem Laufflächenabschnitt und dem Initialmontageabschnitt;
Figur 22 Saugnäpfe, die verwendet werden können, um den Aufsatz zu befestigen; und
Figur 23 Reifenfasseinrichtungen und einen Aufsatz gemäß einer eigenständigen Erfindung; und
Figur 24 Details einer Spannmittelverriegelungseinrichtung.

In den folgenden Figuren tragen sich entsprechende Bauteile und Elemente gleiche Bezugszeichen. Der besseren Übersichtlichkeit wegen sind nicht in allen Figuren sämtliche Bezugszeichen wiedergegeben.

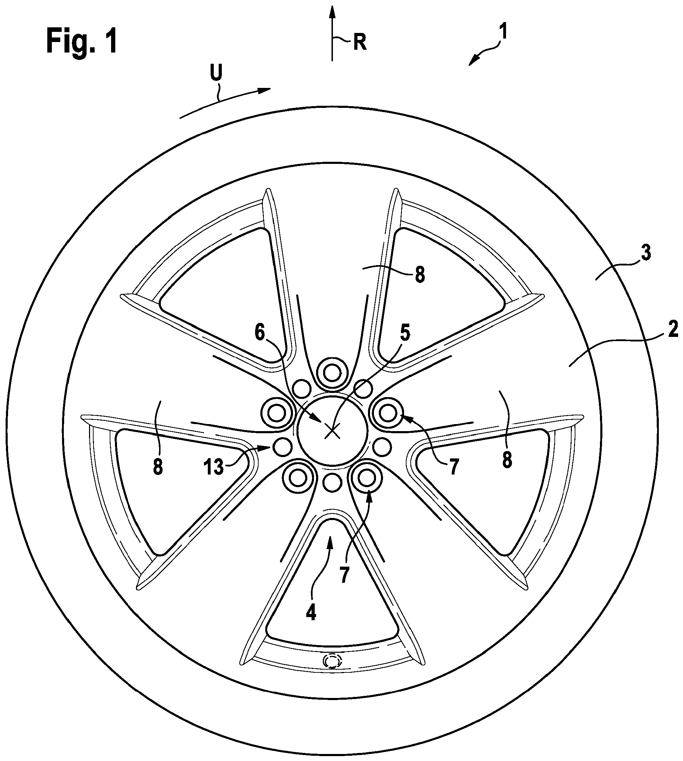

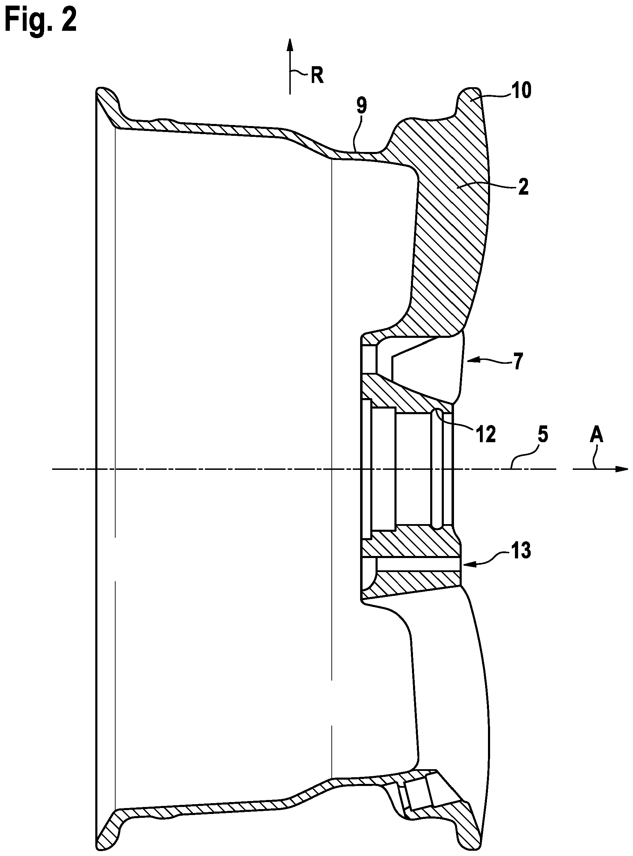

Figur 1 zeigt in schematischer Darstellung ein Fahrzeugrad 1. Das Fahrzeugrad 1 umfasst eine Felge 2 und einen auf der Felge 2 angebrachten Reifen 3. Die Felge 2 ist in Figur 2 einzeln ohne den Reifen 3 gezeigt.

Eine Umfangsrichtung ist durch einen Pfeil mit dem Bezugszeichen U dargestellt. Eine axiale Richtung ist durch einen Pfeil mit dem Bezugszeichen A dargestellt (Figur 2). Eine radiale Richtung ist durch einen Pfeil mit dem Bezugszeichen R dargestellt.

Radial innenliegend umfasst die Felge 2 einen Lochkreis 4 des Fahrzeugrads 1. Im Zentrum des Lochkreises 4 ist um eine entlang der axialen Richtung A verlaufende Drehachse 5 des Fahrzeugrads 1 eine sogenannte Mittenöffnung 6, die teilweise auch als Nabenbohrung oder Mittellochzentrierung bezeichnet wird, angeordnet. Der Lochkreis 4 umfasst vorliegend fünf Schraubenlöcher 7, von denen zwei mit einem Bezugszeichen versehen sind. Bei dem vorliegenden Fahrzeugrad 1 erstrecken sich fünf Speichen 8 vom Bereich des Lochkreises 4 nach radial außen.

Die Felge 2 umfasst ein Felgenbett 9 und ein Felgenhorn 10 und die Mittenöffnung 6 weist eine vertiefte umlaufende Nut 12 auf.

Die Felge 2 weist mehrere Öffnungen 13 auf, die im Bereich des Lochkreises 4 angeordnet sind. Die Öffnungen 13 sind zu den Schraubenlöchern 7, also Löchern 7, die zur Aufnahme von Radschrauben bzw. Stehbolzen vorgesehen sind, und zu der Mittenöffnungen 6 der Felge 2, beabstandet in der Felge 2 angeordnet. Die Öffnungen 13 können, bspw. als Polykontrollbohrungen ausgeführt sein, über die ein Achsspiel der Achse des Fahrzeugrads 1 gemessen werden kann.

Hat der Reifen 3 des Fahrzeugrads 1 ein Loch, so entweicht die im Reifen befindliche Luft und die Reifenfunktion des Fahrzeugrades 1 eingeschränkt. Um in einem solchen Fall den Fahrbetrieb weiterhin zu ermöglichen kann ein erfindungsgemäßer Aufsatz 14 verwendet werden.

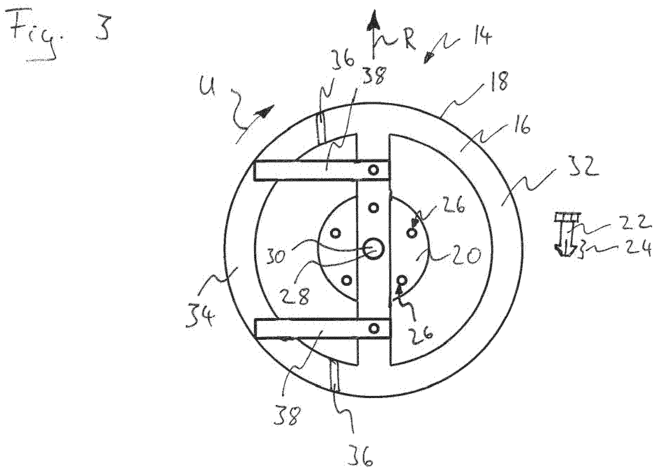

Ein Beispiel eines derartigen Aufsatzes ist in Figur 3 gezeigt. Der Aufsatz 14 ist mit einem Laufflächenabschnitt 16, der eine Lauffläche 18 des Aufsatzes 14 umfasst, und mit einem Initialmontageabschnitt 20, der bei der Montage des Aufsatzes 14 radial innenliegend von der Lauffläche 18 angeordnet ist, ausgebildet.

Der Laufflächenabschnitt 16 ist vorliegend lösbar von dem Initialmontageabschnitt 20 ausgebildet.

Der Initialmontageabschnitt 20 ist ausgebildet, um an dem Fahrzeugrad 1 im Bereich eines Lochkreises 4 einer Felge 2 des Fahrzeugrads 1 befestigt zu werden, insbesondere um über einen formschlüssigen Hintergriff und/oder eine, insbesondere kraftschlüssige, Verbindung im Bereich des Lochkreises 4 der Felge 2 befestigt zu werden.

Der formschlüssige Hintergriff wird im vorliegenden Beispiel mittels einer bzw. mehrerer Greifeinrichtungen 22 realisiert. Die Greifeinrichtung 22 umfasst im vorliegenden Beispiel einen erweiterbaren Abschnitt 24. Die Greifeinrichtung 22 ist im vorliegenden Beispiel bolzenartig ausgebildet und kann in Befestigungslöcher 26 des Initialmontageabschnitts 20 eingesetzt werden. Der erweiterbare Abschnitt 24 ist nach dem Einsetzen der Greifeinrichtung 22 aufspreizbar.

Der Laufflächenabschnitt 16 ist über eine Befestigungseinrichtung 28 am Initialmontageabschnitt 20 befestigbar. Die Befestigungseinrichtung 28 ist vorliegend als zentrale Verschraubungseinrichtung 30 ausgebildet. Die Befestigungseinrichtung 28 ist derart ausgebildet, dass sich der Laufflächenabschnitt 16 beim Befestigen an dem Initialmontageabschnitt 20 in der axialen Richtung A zum Initialmontageabschnitt 20 hin und damit zur Felge 2 hin bewegt, wenn der Initialmontageabschnitt 20 bereits an der Felge 2 angebrachten ist.

Der Laufflächenabschnitt 16 ist vorliegend in der Umfangsrichtung U mehrteilig ausgebildet ist, vorzugsweise wobei der Laufflächenabschnitt 16, ein erstes umfängliches Segment 32 und ein zweites umfängliches Segment 34 umfasst. Das zweite umfängliche Segment 34 ist über lösbare Scharniereinrichtungen 36 lösbar und verschwenkbar mit dem ersten umfänglichen Segment 32 verbunden. Die Scharniereinrichtungen 36 können auch unlösbar ausgebildet sein.

Über zwei, vorliegend schwenkbar ausgebildete, Ausrichteinrichtungen 38 ist das zweite umfängliche Segment 34 gegenüber dem ersten umfänglichen Segment ausrichtbar.

Mit ausrichtbar ist gemeint, dass das zweite umfängliche Segment 34 über die Ausrichteinrichtungen 38 in eine vorgesehene Position gegenüber dem ersten umfänglichen Segment 32 drängbar ist und in dieser Position über die Ausrichteinrichtungen 38 gehalten werden kann.

Die Ausrichteinrichtungen 38 können auch als Verriegelungsmechanismus ausgebildet sein, mit dem die Stellung des zweiten umfänglichen Segments 34 gegenüber dem ersten umfänglichen Segment 32 verriegelbar ist.

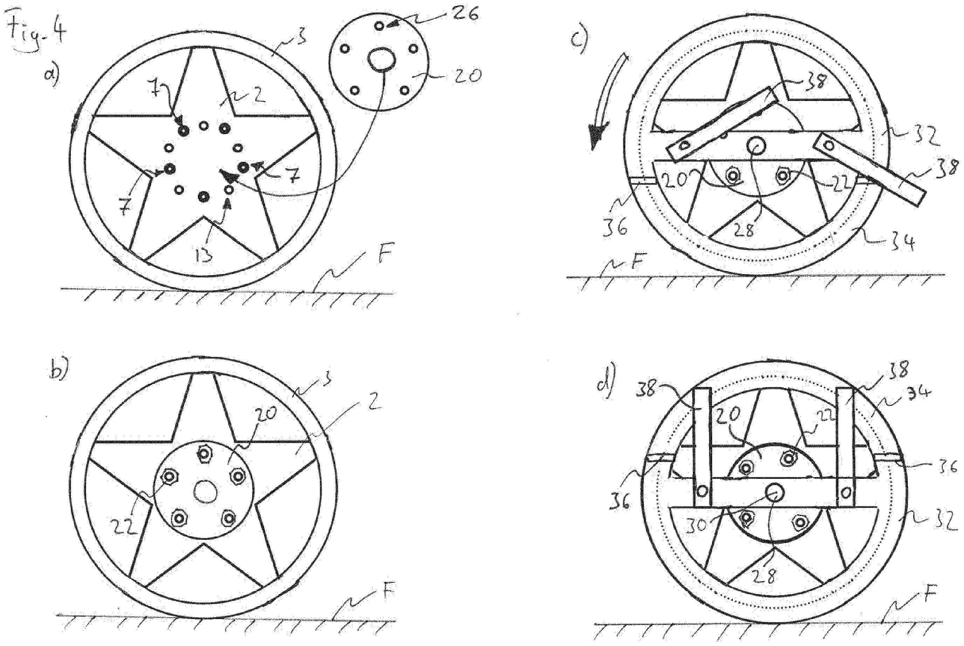

Zum Befestigen des Initialmontageabschnitts 20 werden die Befestigungslöcher 26 über den Öffnungen 13 der Felge 2 platziert (Figur 4a). Anschließend werden die Greifeinrichtungen 22 in die Befestigungslöcher 26 eingeführt und bis in die Öffnungen 13 der Felge 2 eingeschoben. Wenn die Befestigungseinrichtungen 22 komplett durch die Öffnungen 13 hindurchgeschoben sind, wird der erweiterbare Abschnitt 24 aufgespreizt und hierdurch werden die Öffnungen 13 in der Felge 2 formschlüssig hintergriffen (Figur 4b).

Wenn der Initialmontageabschnitt 20 am Fahrzeugrad befestigt ist (Figur 4b), wird in einem nächsten Schritt der Laufflächenabschnitt 16 an dem Initialmontageabschnitt 20 befestigt (Figur 4c). Hierzu wird der Laufflächenabschnitt 16 bei der vorliegenden Ausführungsform über die Befestigungseinrichtung 28 an dem Initialmontageabschnitt 20 befestigt. Bei diesem Befestigungsvorgang bewegt sich der Laufflächenabschnitt 16 in axialer Richtung A auf das Fahrzeugrad 1 zu.

Bei der Befestigung des Laufflächenabschnitts 16 an dem Initialmontageabschnitt 20 wird zunächst das erste umfängliche Segment 32 an dem Initialmontageabschnitt 20 über die Befestigungseinrichtung 28 befestigt. Das zweite umfängliche Segment 34 ist dabei noch nicht mittels der Ausrichteinrichtungen 38 gegenüber dem ersten umfänglichen Segment 32 ausgerichtet. Das zweite umfängliche Segment 34 ist also gegenüber dem ersten umfänglichen Segment 32 noch verschwenkbar. Dadurch ist es in einfacher Art und Weise möglich, das erste umfängliche Segment 32 an dem Initialmontageabschnitt 20 zu befestigen.

Nachdem das erste umfängliche Segment 32 mit dem Initialmontageabschnitt 20 verbunden ist, kann das Fahrzeugrad 1 um eine halbe Umdrehung bewegt werden, sodass das zweite umfängliche Segment 34 nicht mehr zur Fahrbahn F hin ausgerichtet ist, sondern nach oben. Über die Ausrichteinrichtungen 38 kann das zweite umfängliche Segment 34 dann gegenüber dem ersten umfänglichen Segment 32 ausgerichtet und gegebenenfalls verriegelt werden (Figur 4d) .

Der Befestigungsvorgang kann dann abgeschlossen sein. Es ist jedoch auch im Sinne der vorliegenden Erfindung, wenn der Laufflächenabschnitt 16 noch zusätzlich am Fahrzeugrad 1 (bspw. über nachfolgend beschriebene Spannmittel) befestigt wird. Hierauf wird weiter unten noch im Detail eingegangen.

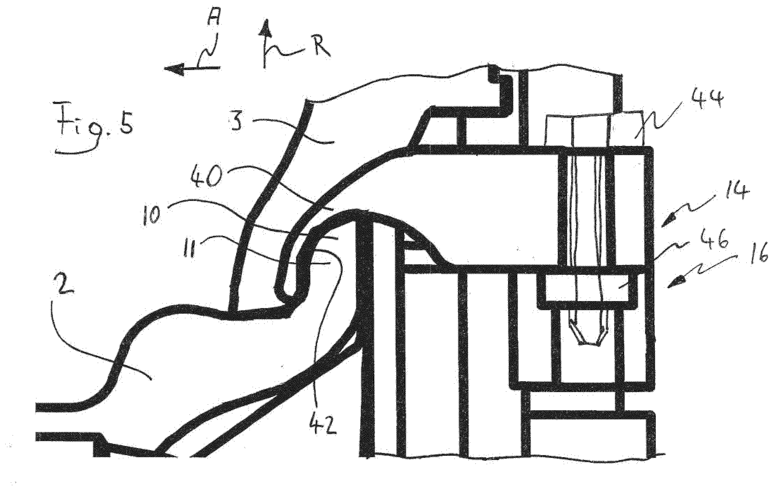

Der Laufflächenabschnitt 16 kann Spannmittel 40 umfassen, die ausgebildet sind, um mit einem Hakabschnitt 42 einen Abschnitt 11, vorliegend das Felgenhorn 10, der Felge 2 des Fahrzeugrads 1 zu hintergreifen. Ein derartiges Hintergreifen des Felgenhorns 10 durch ein Spannmittel 40 ist in Figur 5 illustriert.

Die Spannmittel 40 können dabei beispielsweise radial verschieblich oder auch verschwenkbar ausgebildet sein. Vorzugsweise sind die Spannmittel 40 derart betätigbar, dass sie bei einer Betätigung den Abschnitt 11, insbesondere das Felgenhorn 10, der Felge 2 hintergreifen. In Figur 5 ist das Spannmittel 40 über eine Betätigungsschraube 44 betätigbar. Die Betätigungsschraube 44 greift in ein Gegenstück 46 ein und das Spannmittel 40 wird beim Anziehen der Betätigungsschraube 44 in radialer Richtung auf das Felgenhorn 10 zubewegt, bis es sich in der in Figur 5 gezeigten Hintergriffstellung befindet.

Bevorzugt ist der Hakabschnitt 42 des Spannmittels 40, in axialer Richtung A gesehen, nach radial innen, vorzugsweise linear oder bogenförmig (in Fig. 5 dargestellt), abfallend ausgebildet, wobei das Spannmittel 40 derart ausgebildet ist, dass sich der Hakabschnitt 42 nach radial innen bewegt, insbesondere verschiebt, wenn das Spannmittel 40 betätigt wird und das Spannmittel 40 sich auf die Felge 2, insbesondere auf das Felgenhorn 10, zubewegt, und dass durch die Bewegung des Hakabschnitts 42 der Laufflächenabschnitt 16 in axialer Richtung A zur Felge 2 hin gedrängt wird.

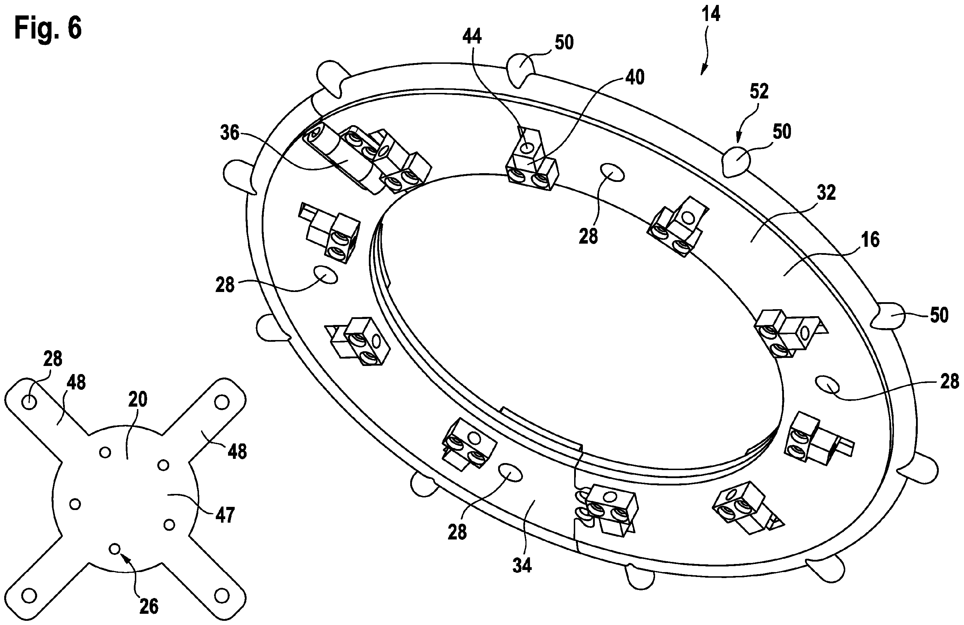

In Figur 6 ist eine weitere erfindungsgemäße Ausführungsform eines Aufsatzes 14 gezeigt. Der Laufflächenabschnitt 16 ist bei dieser Ausführungsform kreisringförmig ausgebildet. Der Initialmontageabschnitt 20 hingegen weist einen kreisscheibenartigen Abschnitt 47 sowie von diesem abragende Arme 48 auf. An den Armen 48 ist der Laufflächenabschnitt 16 über entsprechende Befestigungseinrichtungen 28 befestigbar. Der Laufflächenabschnitt 16 weist bei der Ausführungsform von Figur 6 nur eine einzelne Scharniereinrichtung 36 auf und ihr gegenüberliegend am zweiten umfänglichen Segment 34 eine schwalbenschwanzartige Hintergriffstruktur 49.

Bei der Ausführungsform von Figur 6 weist der Laufflächenabschnitt 16 mehrere Kontaktabschnitte 50 auf. Die Kontaktabschnitte 50 sind jeweils Teil eines Verspannmechanismus 52. Die Kontaktabschnitte 50 sind ausgebildet, um die jeweilig ihnen zugeordneten Spannmittel 40 zu betätigen und den Hakabschnitt 42 in Hintergriff mit dem Abschnitt 11 der Felge 2, vorzugsweise dem Felgenhorn 10, zu bringen, wenn der Kontaktabschnitt 50, betätigt, insbesondere mit Druck beaufschlagt, wird.

Der Verspannmechanismus 52 von Figur 6 ist dabei ausgebildet, um mit dem Kontaktabschnitt 50 bei am Fahrzeugrad 1 angebrachtem Aufsatz 14 und sich drehendem Fahrzeugrad 1 die Fahrbahn F zu kontaktieren und dadurch den Kontaktabschnitt 50 zu betätigen, insbesondere mit Druck zu beaufschlagen. Bevorzugt ist dabei, dass der Kontaktabschnitt 50 räumlich, insbesondere in axialer Richtung gesehen, in der Lauffläche 18 des Aufsatzes 14 angeordnet ist, wie in Figur 6 illustriert.

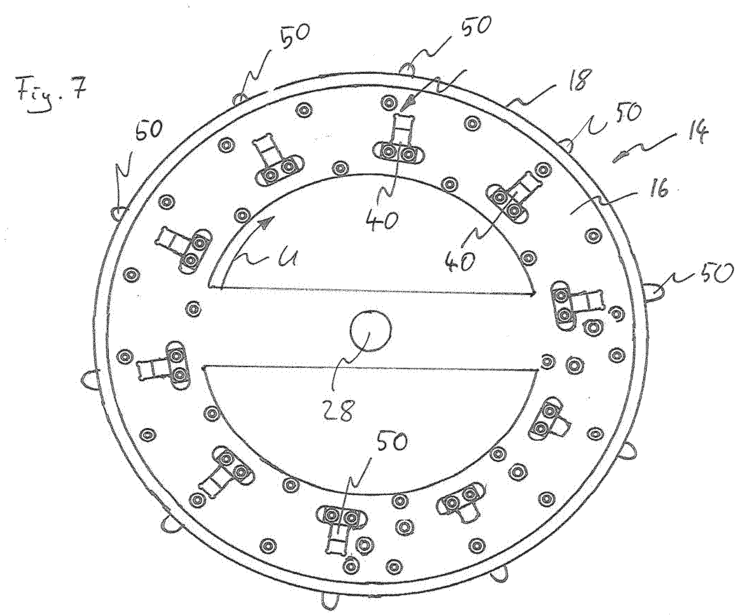

Figur 7 zeigt eine weitere Ausführungsform eines Laufflächenabschnitts 16, der einstückig ausgeführt ist und beispielsweise mit dem Initialmontageabschnitt 20 aus Figur 3 und 4 kombiniert werden kann.

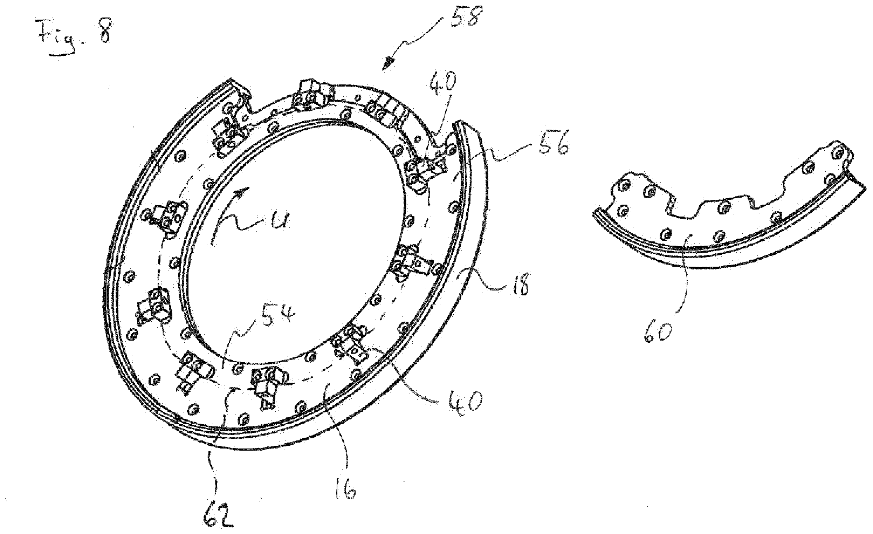

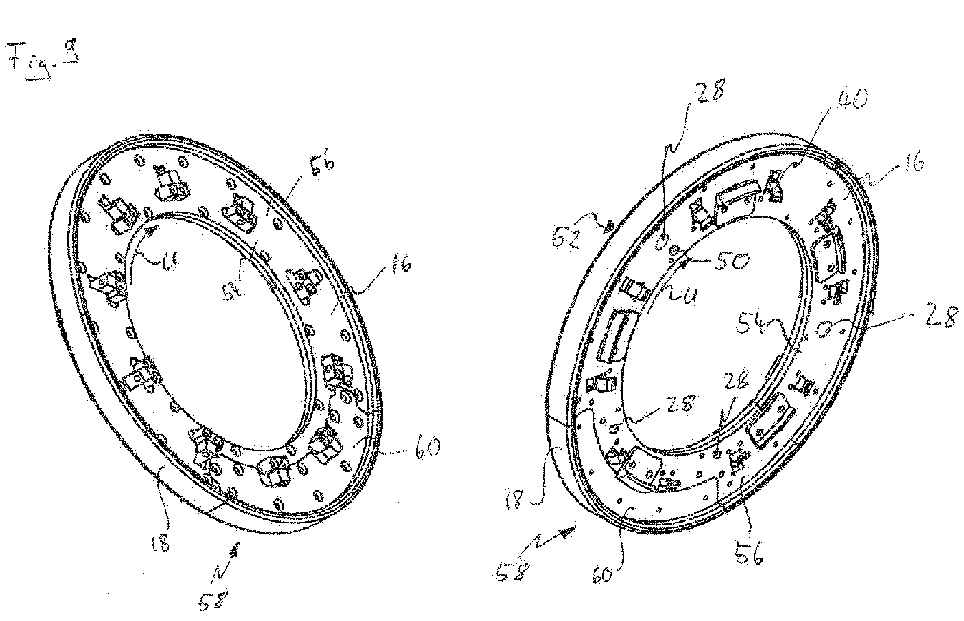

Die Figuren 8 und 9 zeigen eine weitere Ausführungsform eines Laufflächenabschnitts 16 der beispielsweise mit dem Initialmontageabschnitt 20 aus Figur 3 und 4 kombiniert werden kann.

Der Laufflächenabschnitt 16 der Figuren 8 und 9 umfasst einen in Umfangsrichtung U durchgängig ausgebildeten Innenabschnitt 54, der radial innen liegend von einem Außenabschnitt 56 angeordnet ist, wobei der Außenabschnitt 56 in Umfangsrichtung mit einer Unterbrechung 58 ausgebildet ist und wobei der Außenabschnitt 56 weiterhin einen Einsatzabschnitt 60 umfasst, der, wenn der Aufsatz 14 im am Fahrzeugrad 1 montierten Zustand ist, in der Unterbrechung 58 derart aufgenommen ist, dass der Außenabschnitt 56 eine geschlossene kreisförmige Lauffläche 18 aufweist (Figur 9).

Figur 8 zeigt den Einsatzabschnitt 60 dabei in vom Außenabschnitt 56 losgelöstem Zustand und Figur 9 in einem Zustand, in dem er in die Unterbrechung 58 eingesetzt ist.

Zur Montage des Laufflächenabschnitts 16 an dem Initialmontageabschnitt 20 kann die Unterbrechung 58 zunächst zur Fahrbahn F ausgerichtet werden. Das Fahrzeugrad 1 kann während der Montage dabei in Kontakt mit Fahrbahn F verbleiben. Das Fahrzeugrad 1 kann dann bewegt werden, so dass die Unterbrechung 58 von der Fahrbahn F weg zeigt. Anschließend kann der Einsatzabschnitt 60 in die Unterbrechung 58 eingesetzt werden.

Die Ausführungsform von Figur 8 und 9 umfasst auch ein Kopplungsmechanismus 62, der die Betätigung bzw. Bewegung aller Spannmittel 40 miteinander koppelt. Ein derartiger Kopplungsmechanismus 62 kann bei allen Ausführungsformen der Spannmittel 40 vorgesehen sein. Beispielsweise kann der Kopplungsmechanismus 62 als Seilzug ausgeführt sein, mittels dem sich alle Spannmittel 40 gleichförmig und gleichmäßig nach radial innen bewegen lassen.

In Figur 8 und in der linken Darstellung von Figur 9 ist der Laufflächenabschnitt 16 beim Blick auf die dem Fahrzeugrad 1 abgewandte Seite gezeigt. In der rechten Darstellung von Figur 9 ist der Laufflächenabschnitt 16 mit Blick auf die dem Fahrzeugrad 1 zugewandte Seite dargestellt (jeweils auf den am Fahrzeugrad 1 montierten Zustand des Laufflächenabschnitts 16 bezogen).

Der Laufflächenabschnitt 16 aus den Figuren 8 und 9 umfasst, wie in der rechten Darstellung von Figur 9 gezeigt, einen Verspannmechanismus 52 der ausgebildet ist, um mit dem Kontaktabschnitt 50 den Initialmontageabschnitt 20 zu kontaktieren, wenn der Laufflächenabschnitt 16 am Initialmontageabschnitt 20 befestigt wird, und dadurch den Kontaktabschnitt 50 zu betätigen, insbesondere mit Druck zu beaufschlagen. Hierzu ist der Kontaktabschnitt 50 auf der der Felge 2 zugewandten Seite des Aufsatzes 14 angeordnet, wie in Figur 9 rechts illustriert.

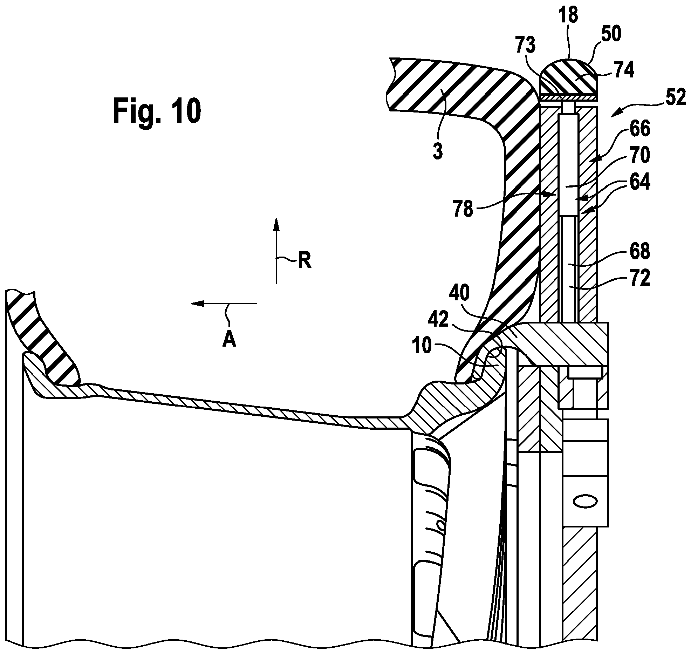

Figur 10 zeigt die Kopplung eines Kontaktabschnitts 50, der wie in Figur 6 oder 7 angeordnet ist, mit einem Spannmittel 40.

Der Kontaktabschnitt 50 kann über eine Druckübertragungseinrichtung 64 mit einer Freilaufeinrichtung 66 mit dem Spannmittel 40 verbunden sein. Die Freilaufeinrichtung 66 kann einen Druckzylinder 68 mit einem ersten Zylinderteil 70 und einem zweiten Zylinderteil 72. Das Spannmittel 40 kann mit dem Kontaktabschnitt 50 über die Freilaufeinrichtung 66 mechanisch gekoppelt sein. Damit ist vorliegend gemeint, dass durch eine Bewegung des Kontaktabschnitts 50 über die Freilaufeinrichtung 66 eine Kraft auf das Spannmittel 40 übertragbar ist. Beim Abrollen des Fahrzeugrads 1 mit dem daran angebrachten Aufsatz 14 werden die Kontaktabschnitte 50 durch den Kontakt mit der Straße nach radial innen bewegt. Dabei werden die Spannmittel 40 bei der oben beschrieben Konfiguration betätigt bzw. vorliegend wird eine Kraft auf die Spannmittel 40 übertragen. Die Spannmittel 40 werden mit dieser Kraft gegen die Felge 2 bzw. das Felgenhorn 10 gedrückt. Die Spannmittel 40 hintergreifen bei Betätigung das Felgenhorn 10. Wenn alle Spannmittel 40 das Felgenhorn 10 hintergreifen, ist der Aufsatz 14 am Fahrzeugrad befestigt. Wird bei der oben genannten Kraftübertragung eine bestimmte Kraft bzw. ein Grenzdruck, mit dem das Spannmittel 40 gegen das Felgenhorn 10 drückt, überschritten, so schieben sich die beiden Zylinderteile 70 und 72 ineinander. Dies geschieht beispielsweise dann, wenn der Kontaktabschnitt 50 noch nicht in seiner Endposition angekommen ist und der Hakabschnitt 42 das Felgenhorn 10 jedoch bereits vollständig hintergreift und an diesem anliegt.

Der Kontaktabschnitt 50 ist bei der vorliegenden Ausführungsform in Form eines in Umfangsrichtung U gewölbten Federblechs 73 ausgeführt, das einen Abschnitt eines Laufflächenkörpers 74 nach radial außen drängt. Dieser Abschnitt des Laufflächenkörpers 74 weicht im unbelasteten Zustand also von der Kreisringform des restlichen Laufflächenkörpers 74 ab und wird beim Abrollen über die Fahrbahn F nach innen gedrückt, wobei Kraft über die Druckübertragungseinrichtung 64 und die Freilaufeinrichtung 66 auf das Spannmittel 40 übertragen wird.

Die Druckübertragungseinrichtung 64 mit der Freilaufeinrichtung 66 kann auch einen Haltemechanismus 78 umfassen. Der Haltemechanismus 78 ist beim vorliegenden Ausführungsbeispiel derart ausgebildet, dass er die beiden Zylinderteile 70 und 72 miteinander verriegelt, wenn der Kontaktabschnitt 50 komplett in die Lauffläche 18 eingefahren ist. Andere Ausführungen des Haltemechanismus 78 sind denkbar. Der Haltemechanismus 78 verhindert, dass die Spannmittel 40 sich aus ihrem Hintergriff mit dem Abschnitt 11 der Felge 10 bzw. dem Felgenhorn 10 bewegen, wenn der Kontaktabschnitt 50 nicht mehr auf der Fahrbahn F aufliegt bzw. mit Druck beaufschlagt wird.

Entsprechende Druckübertragungseinrichtungen 64, bevorzugt mit Freilaufeinrichtung 66 und/oder Haltemechanismus 78, verschiedenster Bauarten können auch mit allen Arten von Kontaktabschnitten 50 kombiniert sein, insbesondere mit einem Kontaktabschnitt 50, der wie bei der Ausführungsform der Figuren 8 und 9 auf der dem Fahrzeugrad 1 zugewandten Seite des Laufflächenabschnitts 16 angeordnet ist.

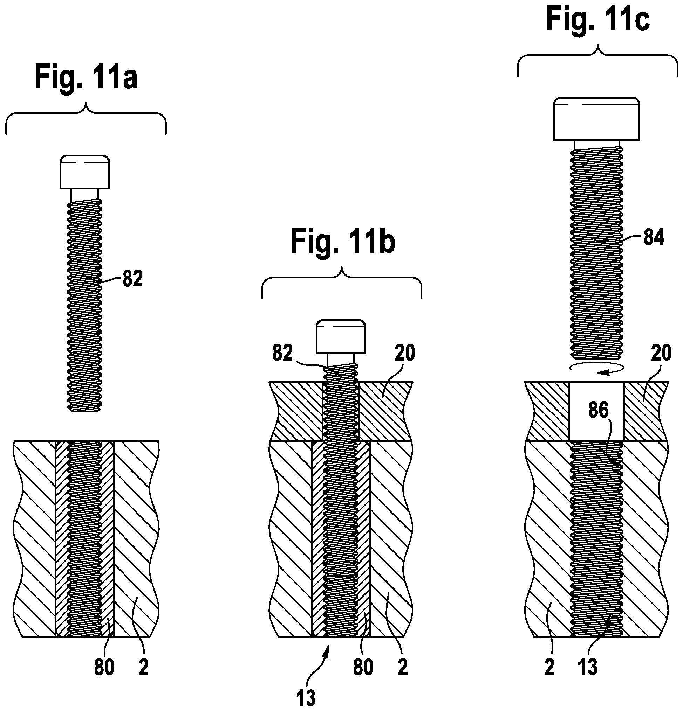

In den Figuren 11 bis 13 sind Beispiele für Greifeinrichtung 22 dargestellt.

Bei der Ausführungsform von Figur 11 a) und b) ist eine aufspreizbare Hülse 80, die einen erweiterbaren Abschnitt 24 der Greifeinrichtung 22 darstellt, in die Öffnung 13 eingesetzt. Zur Befestigung des Initialmontageabschnitts 20 wird dieser mit seinen Befestigungslöchern 26 über den Öffnungen 13 platziert. Anschließend wird eine Schraube, die ein Spreizelement 82 darstellt, in die aufspreizbare Hülse 80 eingeschraubt, wodurch diese aufgespreizt und damit erweitert wird. Im erweiterten Zustand bildet die Hülse 80 eine kraftschlüssige Verbindung mit den Seitenwänden der Öffnung 13 und damit der Felge 2. Die Hülse 80 kann auch unlösbar mit dem Initialmontageabschnitt 20 verbunden sein und stellt dann ein Beispiel für einen Teil der Greifeinrichtung 22 dar, der unlösbar mit dem Initialmontageabschnitt 20 verbunden ist.

In Figur 11 c) ist ein Beispiel für einen formschlüssigen Hintergriff einer Greifeinrichtung 22 mit der Öffnung 13 dargestellt. Eine Schraube 84 kann in ein Gewinde 86, das in den Seitenwänden der Öffnung 13 vorgesehen ist eingeschraubt werden und dieses Gewinde 86 formschlüssig hintergreifen.

Bevorzugt ist jedoch allgemein, wenn eine Greifeinrichtung 22 am Initialmontageabschnitt 20 vorgesehen ist, die eine gewindelose Öffnung 13 formschlüssig hintergreifen kann oder kraftschlüssig in der gewindelosen Öffnung 13 befestigt werden kann.

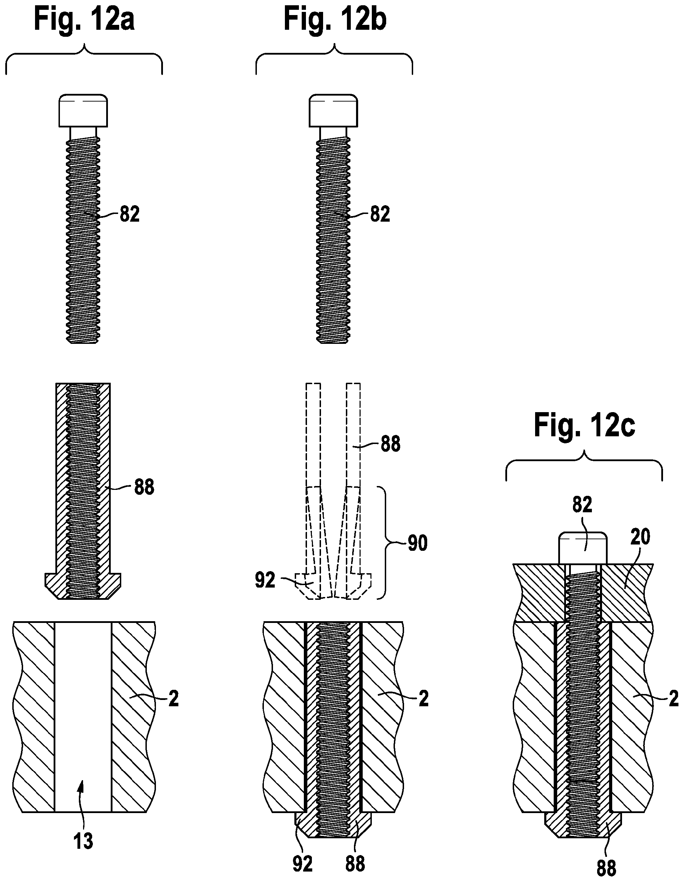

Bei der Ausführungsform von Figur 12 ist eine komprimierbare Hülse 88, die einen komprimierbaren Abschnitt 90 der Greifeinrichtung 22 umfasst, gezeigt. In den Figuren 12 a) bis c) ist gezeigt, wie die komprimierbare Hülse 88 in die Öffnung 13 eingesetzt wird.

In Figur 12 b) ist das Einführen der komprimierbaren Hülse 88 in die Öffnung 13 illustriert. Der komprimierbare Abschnitt 90 umfasst Hakbereiche 92, die beim Durchführen durch die Öffnung 13 nach innen bewegt werden können und die, wenn sie durch die Öffnung 13 durchgeführt wurden, sich in einen unkomprimierten Zustand erweitern und die

Öffnung 13 formschlüssig hintergreifen. Anschließend kann der Initialmontageabschnitt 20 mittels einer Schraube, die ein Spreizelement 82 darstellt befestigt werden (Figur 12 c)).

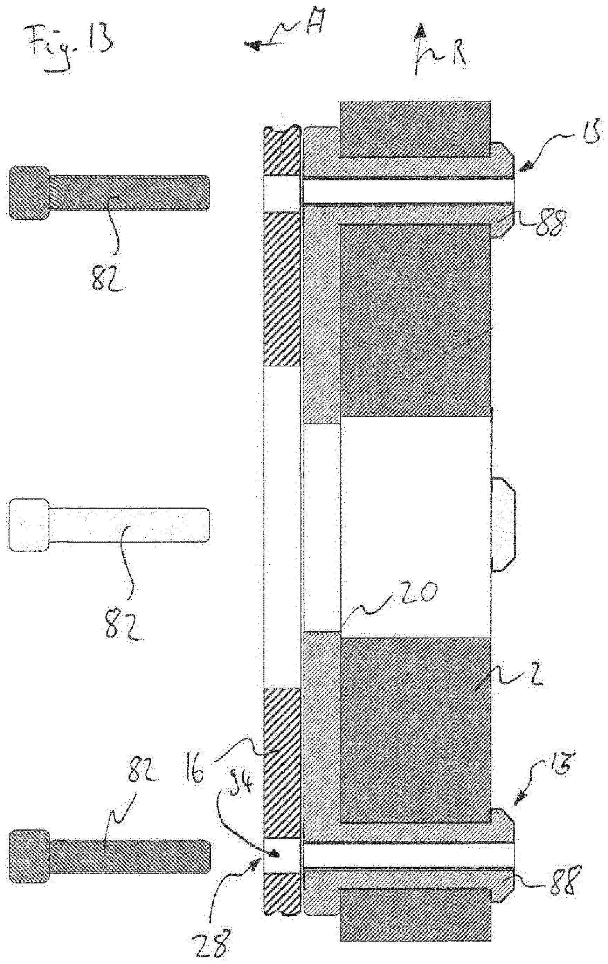

Auch die komprimierbare Hülse 88 kann unlösbar mit dem Initialmontageabschnitt 20 verbunden sein. Eine derartige Version ist in Figur 13 schematisch in einer Schnittdarstellung gezeigt. Bei der Version von Figur 13 wird der Laufflächenabschnitt 16 über entsprechende Löcher 94, die gemeinsam mit den Spreizelementen 82 eine Befestigungseinrichtung 28 bilden, am Initialmontageabschnitt 20 befestigt. Der Initialmontageabschnitt 20 kann über die mit ihm, vorliegend unlösbar, verbundenen komprimierbaren Hülsen 88 quasi in die Öffnungen 13 eingeclipst werden. Die komprimierbaren Hülsen 88 umfassen einen komprimierbaren Abschnitt 90 und stellen eine Greifeinrichtung 22 dar. Der Laufflächenabschnitt 16 kann dann über die Spreizelemente 82 am Initialmontageabschnitt 20 befestigt werden, wobei er sich bei diesem Befestigungsvorgang in axialer Richtung A zur Felge 2 hin bewegt.

Im Sinne der Erfindung ist auch ein System aus einem Aufsatz 14 und einer Felge 2 eines Fahrzeugrads 1, wobei der Aufsatz 14 gemäß einem der nachfolgenden Ansprüche ausgebildet ist, insbesondere gemäß einer der vorhergehend beschriebenen Ausführungsformen, und die Felge 2 wenigstens eine oder mehrere Öffnungen 13, aufweist, die im Bereich des Lochkreises 4 in der Felge 2 angeordnet ist bzw. sind, und wobei die Öffnung 13 zu den Löchern 7, die zur Aufnahme von Radschrauben bzw. Stehbolzen vorgesehen sind, vorzugsweise und zu der Mittenöffnungen 6 der Felge 2, beabstandet angeordnet ist bzw. sind.

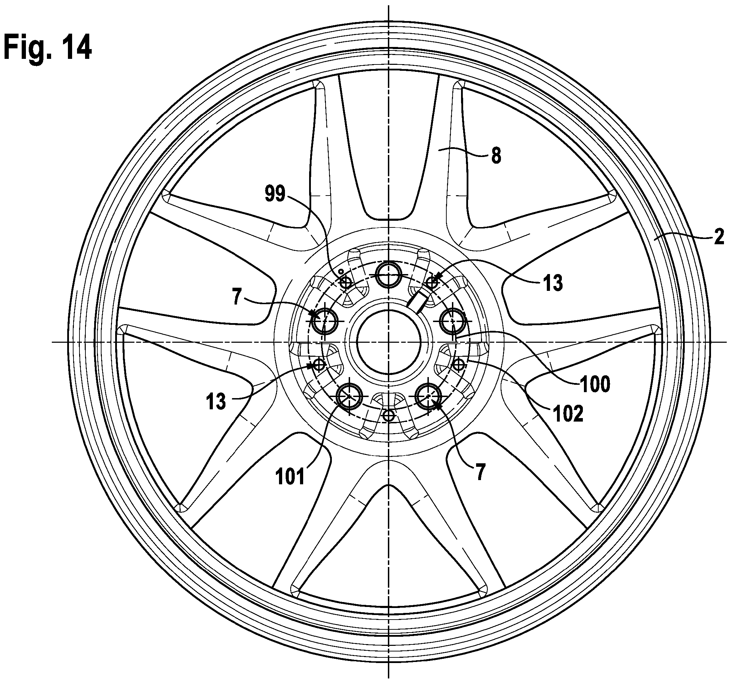

Figur 14 illustriert ein Beispiel einer Felge 2 eines derartigen Systems.

Die Felge 2 aus Figur 14 weist vorliegend fünf Öffnungen 13 auf. Es können jedoch auch mehr oder weniger Öffnungen 13 vorgesehen sein. Bevorzugt ist, wie in Figur 14 dargestellt, wenn die Mittelpunkte 99 der Öffnungen 13 beabstandet, vorzugsweise nach radial außen beabstandet, zu einem Kreis 100 angeordnet sind, der durch die Mittelpunkte 101 der Löchern 7, die zur Aufnahme von Radschrauben bzw. Stehbolzen vorgesehen sind, verläuft. Bevorzugt ist auch, wenn die Mittelpunkte 99 der Öffnungen 13 beabstandet, vorzugsweise nach radial innen beabstandet, zu einem Kreis 102 angeordnet sind, der den kleinsten Kreis bildet, der sämtliche Löcher 7, die zur Aufnahme von Radschrauben bzw. Stehbolzen vorgesehen sind, umschreibt. Die obigen Ausführungen zur Lage der Öffnungen 13 beziehen sich auf eine Blickrichtung in axialer Richtung A.

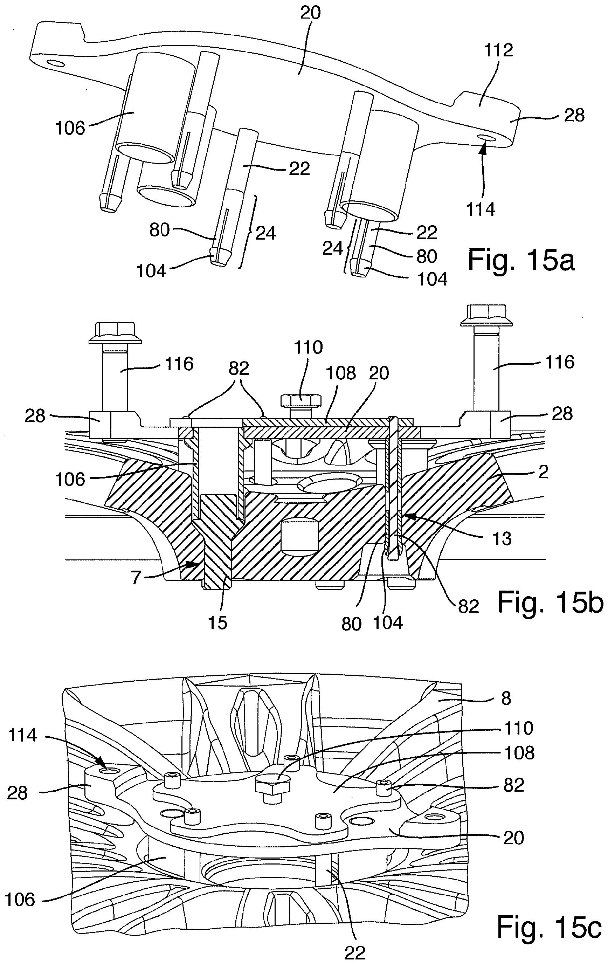

Bevorzugterweise sind die Öffnungen 13 zwischen den Kreisen 101 und 102 derart angeordnet, dass sie mit dem überwiegenden Teil ihres Querschnitts, vorzugsweise mit ihrem gesamten Querschnitt, zwischen den Kreisen liegen. Figur 15 illustriert einen Initialmontageabschnitt 20 (Figur 15a) und dessen Befestigung an einem Fahrzeugrad 1 bzw. der Felge 2 des Fahrzeugrads 1 (Figur 15b und 15c).

Die in Figur 15 illustrierte Ausführungsform umfasst Greifeinrichtungen 22, die hohlstiftartig bzw. als aufspreizbare Hülse 80 ausgebildet sind. Die hohlstiftartig ausgebildeten Greifeinrichtungen 22 weisen jeweils einen erweiterbaren Abschnitt 24 auf. An dem erweiterbaren Abschnitt 24 sind hakartige Vorsprünge 104 angeordnet. Die hakartigen Vorsprünge 24 dienen zum formschlüssigen hintergreifen der Öffnungen 13 in der Felge 2. Der Initialmontageabschnitt 20 kann des Weiteren Abstandshalter 106 umfassen. Die Abstandshalter 106 können dazu dienen, einen definierten Abstand gegenüber der Felge 2 festzulegen. Vorteilhafterweise sind die Abstandshalter 106 hülsenartig ausgebildet. Bevorzugt ist, wenn die Abstandhalter 106 ausgebildet sind, um auf die Radschrauben 15 bzw. deren jeweiligen Kopf aufgesetzt zu werden.

In Figur 15b ist die Montage des Initialmontageabschnitts 20 an der Felge illustriert. Der Initialmontageabschnitt 20 der vorliegenden Ausführungsform umfasst ein Betätigungsteil 108, das im vorliegenden Fall plattenartig ausgebildet ist und an dem Spreizelemente 82 angebracht sind. Das Betätigungsteil 108 kann über eine Zentralschraube 110 mit dem übrigen Initialmontageabschnitt 20 derart verbunden bzw. verbindbar sein, dass die Spreizelemente 82 in den hohlstiftartig ausgebildeten Greifeinrichtungen 22 angeordnet sind. Denkbar sind auch andere bewegliche Verbindungen zwischen dem Betätigungsteil 108 und dem übrigen Initialmontageabschnitt 20. Diese Konfiguration ist in Figur 15b illustriert. Wird die Zentralschraube 110 eingeschraubt, so bewegt sich das Betätigungsteil 108 in axialer Richtung von dem übrigen Initialmontageabschnitt 20 weg. Hierdurch werden die Spreizelemente 82 derart in den hohlstiftartig ausgebildeten Greifeinrichtungen 22 bewegt, dass sich ihr jeweiliger erweiterbare Abschnitt 24 aufweitet und die daran angeordneten hakartigen Vorsprünge 24 die Öffnungen 13 sicher formschlüssig hintergreifen.

Der Initialmontageabschnitt 20 weist eine Befestigungseinrichtung 28 auf, mittels der ein Laufflächenabschnitt 16, wie er bspw. in den Figuren 3 bis 9 gezeigt ist, am Initialmontageabschnitt 20 befestigbar ist. Die in Figur 15 illustrierte Befestigungseinrichtung 28 weist zwei nach radial außen erstreckende Schenkel 112 auf, die jeweils ein Loch 114 mit Gewinde umfassen, in das entsprechende Schrauben 116 eingeschraubt werden können, mit denen der Laufflächenabschnitt 16 am Initialmontageabschnitt 20 befestigbar ist.

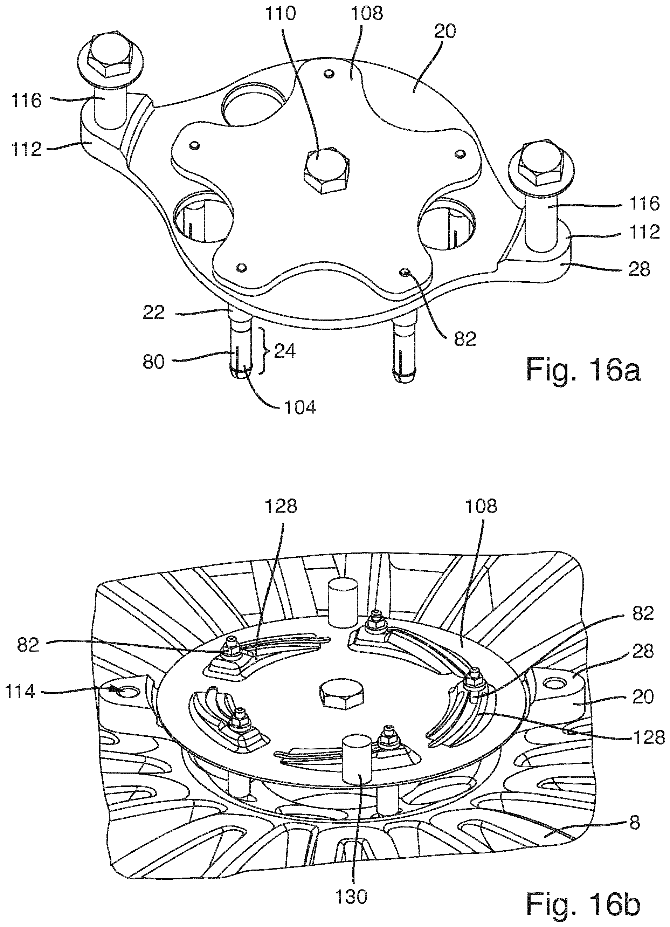

Figur 16a zeigt den Initialmontageabschnitt 20 aus Figur 15 in einer perspektivischen Darstellung.

Figur 16b zeigt eine alternative Ausbildung des Initialmontageabschnitts 20. Bei dem Initialmontageabschnitt 20 aus Figur 16 ist das Betätigungsteil 108 mit kreissegmentförmigen Schlitzen, die auf rampenartigen Erhebungen 128 laufen versehen. Durch ein Verdrehen des Betätigungsteil 108 werden die Spreizelemente 82 durch ein Gleiten entlang der rampenartigen Erhebungen in den Greifeinrichtungen 22 bewegt, wodurch diese aufgespreizt werden. Die Verdrehung des Betätigungsteils 108 kann über entsprechende Handgriffe 130 manuell vorgenommen werden.

Die beschriebenen Betätigungsteile 108 sind lediglich beispielhaft zu verstehen. Allgemein kann das Betätigungsteil 108 ausgebildet sein, um durch eine Bewegung des Betätigungsteils 108 gegenüber dem übrigen Initialmontageabschnitt 20 eine Bewegung der Spreizelemente 82 hervorrufen zu können, derart dass die Greifeinrichtungen 22 in formschlüssigen Hintergriff mit den entsprechenden Öffnungen 13 gelangen, insbesondere, dass erweiterbare Abschnitte 24 an den Greifeinrichtungen 22 aufgeweitet bzw. gespreizt werden.

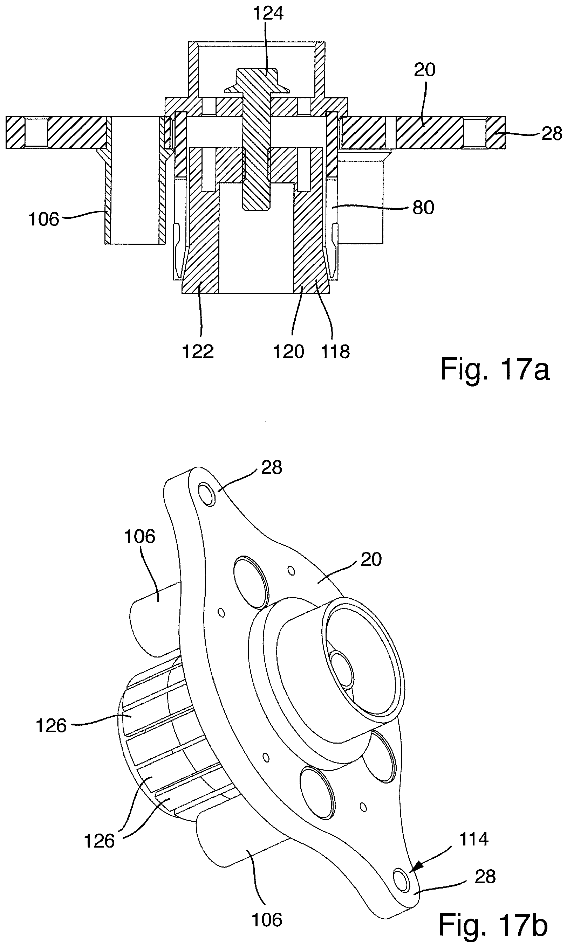

Figur 17 zeigt eine weitere mögliche Ausgestaltung eines Initialmontageabschnitts 20. Die Befestigungseinrichtung 28 entspricht dabei der Ausbildung der Befestigungseinrichtung 28 von Figur 15. Andere Ausbildungen einer Befestigungseinrichtung 28 zur Befestigung des Laufflächenabschnitts 16 sind möglich.

Der in Figur 17 illustrierte Initialmontageabschnitt 20 weist eine Greifeinrichtung 22 auf. Der Initialmontageabschnitt 20 ist ausgebildet, um über einen kraftschlüssigen Eingriff der Greifeinrichtung 22 mit der Mittenöffnung 6 der Felge 2 am Fahrzeugrad 1 befestigt zu werden. Es ist auch möglich, dass die Greifeinrichtung 22 ausgebildet ist um in der Mittenöffnung 6 formschlüssig zu hintergreifen.

Die Greifeinrichtung 22 ist in dem Beispiel von Figur 17 in Form einer geschlitzten bzw. aufspreizbaren Hülse 80 ausgebildet. Im Innern der geschlitzten bzw. aufspreizbaren Hülse 80 ist ein Element 118 mit variierender radialer Erstreckung, das vorliegend als ein Konuselement 120 (das Element 118 weist einen konusförmigen Abschnitt 122 auf) ausgebildet ist, angeordnet. Das Element 118 mit variierender radialer Erstreckung ist gegenüber der geschlitzten bzw. aufspreizbaren Hülse 80 in axialer Richtung A bewegbar. Zur Bewegung in axialer Richtung A des Elements 118 gegenüber der geschlitzten bzw. aufspreizbaren Hülse 80 weist der Initialmontageabschnitt 20 eine Spannschraube 124 auf. Durch die axiale Bewegung des Elements 118 (in der Darstellung von Figur 17a nach oben) kann die geschlitzte bzw. aufspreizbare Hülse 80 aufgespreizt werden, sodass sie in die Mittenöffnung 6 kraftschlüssig eingreift. Damit ist vorliegend gemeint, sie erstreckt sich in die Mittenöffnung 6 und greift diese von innen bzw. liegt von innen kraftschlüssig an der Wandung der Mittenöffnung 6 an. Die geschlitzte Hülse 80 weist eine Mehrzahl an spreizbaren Armen 126 auf. Die nach radial außen beweglichen, insbesondere biegsamen Arme 126, stellen einen erweiterbaren Abschnitt 24 dar. Die Arme 126 können auch wesentlich weiter voneinander beabstandete sein, als in Figur 17b gezeigt. Es ist beispielsweise möglich, dass lediglich zwei, vorzugsweise sich gegenüberliegend angeordnete, spreizbare Arme 126 vorhanden sind.

An einem oder mehreren der Armen 126 bzw. an dem erweiterbaren Abschnitt 24 allgemein können Vorsprünge angeordnet sein, die in eine entsprechende Nut bzw. generell eine Ausnehmung in der Mittenöffnung 6 eingreifen können. Die Befestigung kann über einen formschlüssigen Hintergriff erfolgen.

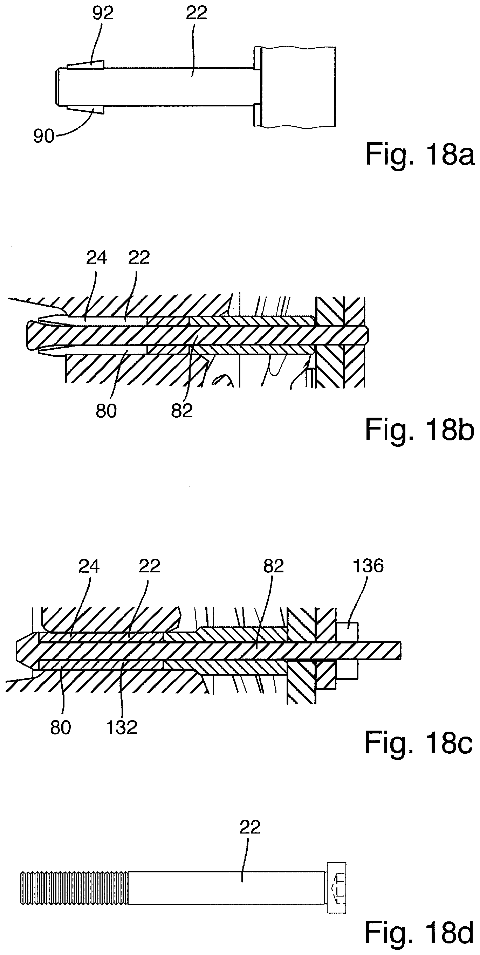

Figur 18 illustriert verschiedene Ausführungsformen für Greifeinrichtungen 22, die in Öffnungen 13, vorzugsweise in Polykontrollbohrungen der Felge 2, einführbar sind, und dort zur Befestigung mittels eines formschlüssigen Hintergriffs oder eines kraftschlüssigen Eingriffs dienen können.

Die in Figur 18a gezeigte Variante ist ähnlich der in Figur 12 gezeigten Ausführungsform ausgebildet. Die Variante von Figur 18a einer Greifeinrichtung 22 wird jedoch lediglich durch ein stiftartiges Element, mit mehreren Hakbereichen 92, die einen komprimierbaren Abschnitt 90 darstellen, gebildet. Die Variante von Figur 18a benötigt kein Spreizelement 82. Mit den Greifeinrichtungen 22 gemäß Figur 18a kann der Initialmontageabschnitt 20 quasi direkt in die Öffnung(en) 13 bzw. Polykontrollbohrung(en) eingesteckt werden. Die Greifeinrichtungen 22 können fest (ähnlich Figur 13) oder lösbar am Initialmontageabschnitt 20 angebracht sein oder durch diesen hindurch steckbar ausgebildet sein.

Die in Figur 18b gezeigte Variante ist entsprechend den in Figur 15 und 16 gezeigten Varianten der Greifeinrichtung 22 ausgebildet. Die Greifeinrichtung 22 aus Figur 18b ist für einen formschlüssigen Hintergriff ausgebildet.

Die in Figur 18c gezeigte Variante der Greifeinrichtung 22 ist für einen kraftschlüssigen Eingriff ausgebildet. Hierzu weist die Greifeinrichtung 22 einen erweiterbaren Abschnitt 24 auf, der vorliegend durch eine stauchbare Hülse 132 gebildet ist. Mit einer stauchbaren Hülse 132 ist dabei eine Hülse gemeint, die bei Reduktion ihrer axialen Erstreckung ihre radiale Erstreckung vergrößert. Beim Anziehen des Spreizelements 82, vorliegend über die Mutter 136, wird die axiale Erstreckung der stauchbaren Hülse 132 reduziert und die stauchbare Hülse 132 erweitert ihre radiale Erstreckung. Hierdurch liegt die stauchbare Hülse 132 kraftschlüssig an der inneren Wandung der Öffnung 13 an und ein kraftschlüssiger Eingriff liegt vor.

Die in Figur 18d gezeigte Variante der Greifeinrichtung 22 ist für einen formschlüssigen Hintergriff ausgebildet. Bei der Variante von Figur 18d wird die Greifeinrichtung 22 durch eine Schraube gebildet. Dies setzt voraus, dass die Öffnung 13 ein Gewinde aufweist bzw. ein Gegengewinde hinter der Öffnung angeordnet ist, in das die Schraube eingeschraubt werden kann.

Bevorzugt ist, wenn die Greifeinrichtung 22 für einen gewindefreien formschlüssigen Hintergriff in der Öffnung 13 ausgebildet ist. Damit ist gemeint, dass weder die Öffnung 13 ein Gewinde aufweist, noch hinter der Öffnung ein Gegengewinde angeordnet ist, in das die Greifeinrichtung 22 eingreifen könnte. Dabei ist mit einem Gewinde auch gemeint, wenn in die Öffnung 13 ein Material eingebracht wird, dass die Schraube ein Gewinde selbsttätig einschneiden kann bzw. hinter der Öffnung 13 ein derartiges Material angeordnet ist. Die Verwendung eines derartigen Materials in Verbindung mit einer gewindeschneidenden Schraube ist jedoch ebenso im Sinne der vorliegenden Erfindung. Bevorzugt ist die Greifeinrichtung 22 selbst gewindefrei. Sie weist also zur Erzeugung des formschlüssigen Hintergriffs kein Gewinde auf. Ein Gewinde kann jedoch zur Bewegung der Greifeinrichtung 22 vorliegen. Beispielsweise zeigt die Ausführungsform von Figur 15b eine gewindefreie Greifeinrichtung 22.

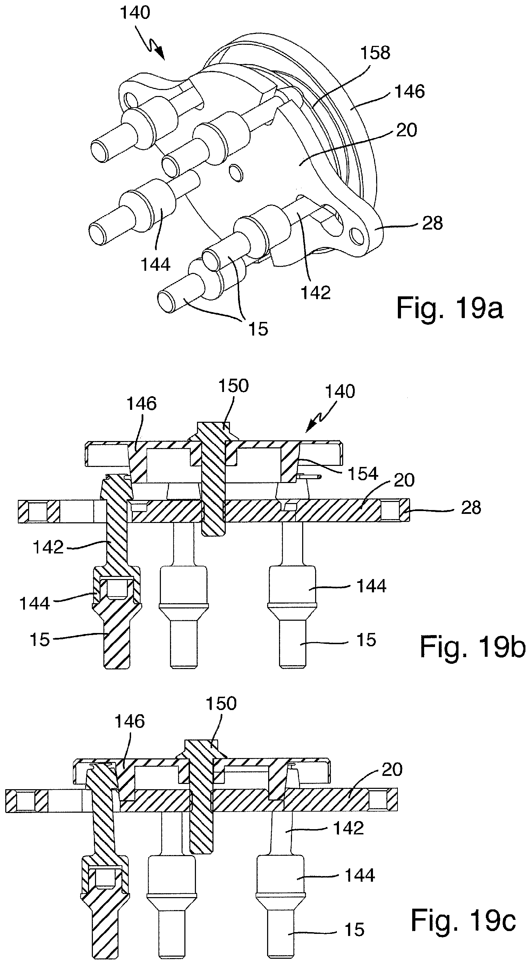

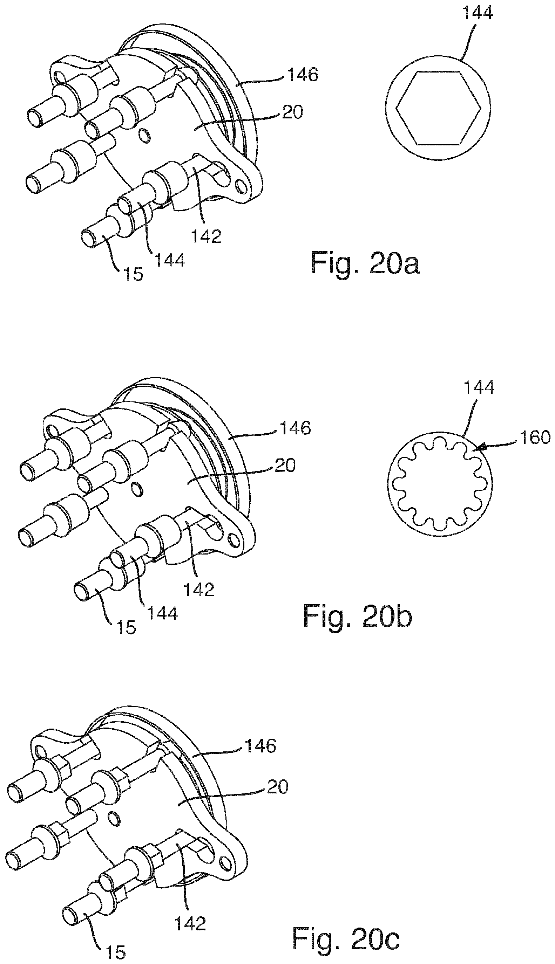

Figur 19 illustriert einen Initialmontageabschnitt 20, der ausgebildet ist, um über eine Klemmeinrichtung 140 an Radschrauben 15 des Fahrzeugrads 1 befestigt zu werden, wobei die Klemmeinrichtung 140 ausgebildet ist, um klemmend an wenigstens zwei Radschrauben 15 gemeinsam anzugreifen und diese zu fassen. Die Klemmeinrichtung 140 umfasst mehrere Befestigungselemente 142. Die Klemmeinrichtung 140 weist wenigstens zwei, vorzugsweise jedoch wie in Figur 19 gezeigt für jede Radschraube 15 ein, Befestigungselement 142 auf. Das Befestigungselement 142 kann ausgebildet sein, um in eine Öffnung im Kopf der Radschraube 15 eingesetzt zu werden (Figur 20c). Es ist auch möglich, dass das Befestigungselement 142 ausgebildet ist, um auf den Kopf einer Radschraube 15 aufgesetzt zu werden (Figur 19a-c und Figur 20a und 20b), wobei das Befestigungselement 142 mit einem Abschnitt 144, der den Schraubenkopf aufnimmt, komplementär zur Außenkontur (üblicherweise ein Sechskant) des Kopfes der Radschraube 15 ausgebildet sein kann, oder der Abschnitt 144 des Befestigungselements 142, der den Schraubenkopf aufnimmt, kann auf seiner Innenseite Längsriefen aufweisen, um eine Verdrehung des Befestigungselements 142 gegenüber dem Schraubenkopf zu verhindern.

Die Klemmeinrichtung 140 umfasst eine Biegeeinrichtung 144. Die Biegeeinrichtung 146 ist vorliegend ausgebildet, um die Befestigungselemente 142, vorzugsweise wie gezeigt sämtliche Befestigungselemente 142, voneinander weg zu biegen, wenn sie auf den Kopf der Radschraube(n) 15 aufgesetzt (Figur 19a-c und Figur 20a und 20b) bzw. in die Öffnung im Kopf (Figur 20c) der Radschraube 15 eingesetzt sind.

Die Biegeeinrichtung 146 kann auch ausgebildet sein, um die Befestigungselemente 142 aufeinander zu zu biegen, wenn sie auf den Kopf der Radschraube(n) 15 aufgesetzt (Figur 19a-c und Figur 20a und 20b) bzw. in die Öffnung im Kopf (Figur 20c) der Radschraube 15 eingesetzt sind.

Im vorliegenden Beispiel biegt die Biegeeinrichtung 146 die Befestigungselemente 142 voneinander weg, wenn sie über die Schraube 150 auf die Befestigungselemente 142 zubewegt wird. Durch das aufeinander zu oder voneinander weg Biegen der Befestigungselemente 142 werden die Befestigungselemente 142 gegeneinander verspannt. Die Klemmeinrichtung 140 greift hierdurch klemmend an den Radschrauben 15 gemeinsam an und fasst diese klemmend.

Wie in Figur 19 gezeigt, kann die Biegeeinrichtung 146 derart ausgebildet sein, dass sie, bspw. mittels der Schraube 150, in axialer Richtung beweglich gegenüber dem übrigen Initialmontageabschnitt 20 bzw. den Befestigungselementen 142 ist. Beim axialen Heranbewegen an den oder beim Wegbewegen von dem Initialmontageabschnitt 20 bzw. an die oder von den Befestigungselementen 142 werden die Befestigungselemente 142 aufeinander zu oder voneinander weg gebogen. Dies kann beispielsweise über eine abgeschrägte Fläche 154 an der Biegeeinrichtung 146, wie in Figur 19 gezeigt, erreicht werden.

Figur 19b zeigt die Befestigungselemente 142 im unverspannten Zustand und Figur 19c im verspannten bzw. voneinander weggebogenen Zustand.

Denkbar ist auch, wenn die Biegeeinrichtung 146 in Form eines Spannrings (nicht dargestellt), der die Befestigungselemente 142 umschließt und in seinem Durchmesser reduzierbar ist oder zwischen den Befestigungselementen 142 angeordnet ist und erweiterbar ist, ausgebildet ist. Möglich ist, wie in Fig. 19 gezeigt, dass die Biegeeinrichtung 146 über eine Feder 158 zum Initialmontageabschnitt 20 bzw. zu den Befestigungselementen 142 hin bzw. von diesem bzw. diesen weg gespannt ist. Über die Schraube 150 kann die Biegeeinrichtung 146 entgegen der Spannrichtung der Feder 158 bewegt werden.

Die Biegeeinrichtung 146 kann auch ein, vorzugsweise plattenförmiges, Element (ähnlich dem Betätigungsteil 108 mit kreissegmentförmigen Schlitzen aus Figur 16b) mit insgesamt von einer Kreisbahn abweichenden kreisbogenförmigen Schlitzen umfassen. Ein derartiges Element weist keine Erhebungen 128 auf und die kreissegmentförmigen Schlitze verlaufen, anders als in Figur 16b nicht insgesamt auf einer Kreisbahn, sondern weichen von dieser ab. Hierdurch werden beim Verdrehen des Elements die in den kreissegmentförmigen Schlitzen befindlichen Befestigungselemente 142 nach innen bzw. außen gebogen, je nach Richtung in der die Schlitze von der Kreisbahn abweichen.

Figur 20 illustriert verschiedene mögliche Arten des Befestigungselements 142, insbesondere des Abschnitt 144, der den Schraubenkopf aufnimmt. Der Abschnitt 144, der den Schraubenkopf aufnimmt, kann komplementär zur Außenkontur (üblicherweise ein Sechskant) des Kopfes der Radschraube 15 ausgebildet sein (Figur 20a). Der Abschnitt 144 des Befestigungselements 142, der den Schraubenkopf aufnimmt, kann auf seiner Innenseite auch Längsriefen 160 aufweisen, um eine Verdrehung des Befestigungselements 142 gegenüber dem Schraubenkopf zu verhindern (Figur 20b). Figur 20c illustriert eine Art des Befestigungselements 142, bei der das Befestigungselement 142 in eine innere Ausnehmung am Schraubenkopf eingeführt werden kann.

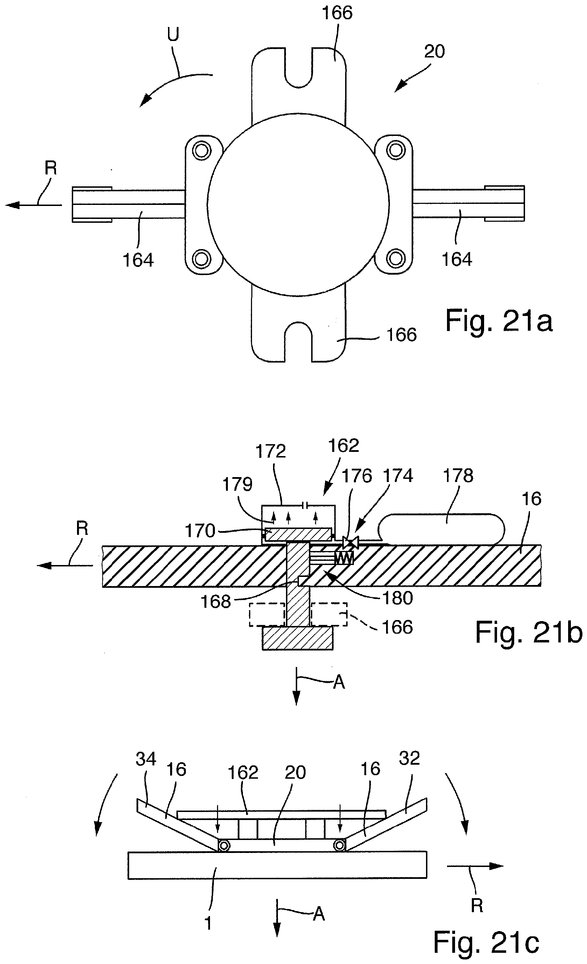

Figur 21 illustriert eine Möglichkeit zur Verbindung zwischen dem Laufflächenabschnitt 16 und dem Initialmontageabschnitt 20 derart, dass der Laufflächenabschnitt 16 über eine Betätigungseinrichtung 162 in axialer Richtung A gegenüber dem Initialmontageabschnitt 20 bewegbar ist.

Figur 21a zeigt den Initialmontageabschnitt 20 beim Blick in axialer Richtung. Der Initialmontageabschnitt 20 der gezeigten Ausführungsform weist zwei abragende Montagearme 164 zur Anbringung des Laufflächenabschnitts 16 auf. Der Initialmontageabschnitt 20 der gezeigten Ausführungsform weist auch zwei Aufnahmen 166, die zur Aufnahme je eines Montageelements 168 ausgebildet sind, auf. Auf das Montageelement 168 wird im Zusammenhang mit Figur 21b noch weiter im Detail eingegangen.

Die Montagearme 164 können ausgebildet sein, damit ein einteiliger Laufflächenabschnitt 16 an ihnen anbringbar ist. Vorzugsweise sind die Montagearme 164 jedoch derart ausgebildet, dass ein Laufflächenabschnitt 16 mit einem ersten umfänglichen Segment 32 und einem zweiten umfänglichen Segment 34 an dem Initialmontageabschnitt 20 anbringbar ist. Bei der Montage kann zunächst der Initialmontageabschnitt 20 an der Felge 2 im Bereich des Lochkreises 4 über einen formschlüssigen Hintergriff im Bereich des Lochkreises 4 der Felge 2 und/oder über eine, vorzugsweise kraftschlüssige, Verbindung im Bereich des Lochkreises 4 der Felge 2, am Fahrzeugrad 1 im Bereich des Lochkreises 4 der Felge 2 befestigt zu werden, bspw. auf eine der oben genannten Arten.

Das erste umfängliche Segment 32 kann dann an den Initialmontageabschnitt 20 angesetzt werden und durch Betätigung der Betätigungseinrichtung 162 über die Betätigungseinrichtung 162 in axialer Richtung A zu diesem hin bewegt werden.

Vorzugsweise weist der Laufflächenabschnitt 16 Spannmittel 40 auf, die ausgebildet sind, um mit einem Hakabschnitt 42 einen Abschnitt 11, vorliegend das Felgenhorn 10, der Felge 2 des Fahrzeugrads 1 zu hintergreifen. Vorzugsweise umfasst der Aufsatz 14 einen Verspannmechanismus 52 mit einem Kontaktabschnitt 50, der vorzugsweise am Laufflächenabschnitt 16 angeordnet ist, wobei der Kontaktabschnitt 50 vorzugsweise auf der dem Fahrzeugrad 1 zugewandten Seite des Aufsatzes 14 angeordnet ist. Der Kontaktabschnitt 50 kann dabei bevorzugt derart angeordnet sein, dass beim Bewegen des Laufflächenabschnitts 16 in axialer Richtung A gegenüber dem Initialmontageabschnitt 20 mittels der Betätigungseinrichtung 162, der Kontaktabschnitt 50 das Fahrzeugrad 1 und/oder den Initialmontageabschnitt 20 kontaktiert und dadurch betätigt wird. Der Aufsatz bzw. das jeweilige umfängliche Segment 32, 34 kann also bei Betätigung der Betätigungseinrichtung 162 quasi automatisch mit den Spannmitteln 40 das Felgenhorn 10 hintergreifen.

Vorliegend gezeigt ist eine pneumatische Betätigungseinrichtung 162. Die Betätigungseinrichtung 162 kann jedoch auch rein mechanisch, insbesondere federvorgespannt, ausgeführt sein. Es ist auch denkbar eine Betätigungseinrichtung 162 vorzusehen die pneumatisch und federvorgespannt arbeitet. Auch eine elektrische Betätigungseinrichtung 162 ist möglich.

Zur Funktion der Betätigungseinrichtung 162: Ein umfängliches Segment 32, 34 wird an die Montagearme 164 angesetzt. Das Montageelement 168 wird in die Aufnahmen 166 am Initialmontageabschnitt 20 eingesetzt. Das Montageelement 168 ist verschieblich in dem umfänglichen Segment 32, 34 des Laufflächenabschnitts 16 gelagert. Das Montageelement 168 erstreckt sich mit einem Kolbenabschnitt 170 in einen Druckraum 172. Der Druckraum 172 weist einen Druckmittelanschluss 174 mit einem Ventil 176 auf. An den Druckmittelanschluss 174 ist eine Druckmittelquelle 178 anschließbar. Eine derartige Druckmittelquelle 178 kann eine kleine Gaskartusche sein, wie man sie bspw. aus Reparatursets für Fahrradreifen kennt. Eine derartige Druckmittelquelle 178 kann aber auch ein weiterer Reifen des Fahrzeugs sein, der noch über genügend Luftdruck verfügt. Denkbar ist auch die Verwendung eines Kompressors.

Ist die Druckmittelquelle an den Druckmittelanschluss 174 angeschlossen, so kann das Ventil 176 geöffnet werden und der Druckraum 172 wird mit Druckmittel beaufschlagt. Der Kolbenabschnitt 170 bewegt sich dann derart im Druckraum 172, dass der Laufflächenabschnitts 16 bzw. bei einem mehrteiligen Laufflächenabschnitts 16 das jeweilige umfängliche Segment 32, 34 sich in axialer Richtung A auf den Initialmontageabschnitt 20 zu bewegt bzw. sich zum Fahrzeugrad 1 hin bewegt. In Figur 21b ist diese Bewegung durch die Pfeile 179 illustriert.

Mit "der Laufflächenabschnitt 16 ist derart mit dem Initialmontageabschnitt 20 verbunden oder verbindbar, dass er über die Betätigungseinrichtung 162 in axialer Richtung A gegenüber dem Initialmontageabschnitt 20 bewegbar ist" ist auch gemeint, dass wenigstens ein Teil, insbesondere ein umfängliches Segment 32, 34 des Laufflächenabschnitts 16 in axialer Richtung A gegenüber dem Initialmontageabschnitt 20 bewegbar ist. Vorzugsweise ist der gesamte Laufflächenabschnitt 16 bzw. alle umfänglichen Segmente 32, 34 über die Betätigungseinrichtung 162 bewegbar.

Vorzugsweise weist der Aufsatz, insbesondere der Laufflächenabschnitt 16 einen Verriegelungsmechanismus 180 auf, der den Laufflächenabschnitt 16 (bzw. ein jeweiliges umfängliches Segment 32, 34) in seiner Position gegenüber dem Initialmontageabschnitt 20 verriegelt, wenn dieser sich in die vorgesehene Position gegenüber dem Initialmontageabschnitt 20 bewegt hat. In Figur 21b ist als Beispiel für den Verriegelungsmechanismus 180 ein federgespannter Stift gezeigt, der in eine Ausnehmung an dem Montagelement 168 einrastet, wenn der Laufflächenabschnitt 16 sich zum Initialmontageabschnitt 20 hin bewegt hat.

Denkbar ist auch, dass das Montagelement 168 statt durch das Druckmittel oder zusätzlich zu dem Druckmittel über eine vorgespannte Feder, insbesondere eine Druckfeder, bewegt wird, die beim Montieren des Laufflächenabschnitts 16 entriegelt wird und dadurch das Montagelement 168 derart bewegt, dass der Laufflächenabschnitt 16 sich zum Initialmontageabschnitt 20 hinbewegt. Andere Ausführungsarten der Betätigungseinrichtung 162, die bei Betätigung eine Relativbewegung zwischen Laufflächenabschnitt 16 und Initialmontageabschnitt 20 verursachen, sind ebenso im Sinne der Erfindung. Bevorzugt ist die Betätigungseinrichtung 162 derart ausgebildet, dass sich der Laufflächenabschnitt 16 auf den Initialmontageabschnitt 20 zu bewegt, wenn die Betätigungseinrichtung 162 betätigt wird.

Figur 21c illustriert eine weitere mögliche Ausbildung der Betätigungseinrichtung 162. Bei der Ausführungsform von Figur 21c sind zwei umfängliche Segmente 32, 34 des Laufflächenabschnitts 16 schwenkbar an dem Initialmontageabschnitt 20 angebracht. Bei Betätigung der Betätigungseinrichtung 162 werden die umfänglichen Segmente 32, 34 zum Fahrzeugrad 1 hin verschwenkt.

Im Sinne der vorliegenden Erfindung ist ein Aufsatz 14, der eine Betätigungseinrichtung 162 umfasst, die ausgebildet ist, um eine Relativbewegung zwischen dem Initialmontageabschnitt 20 und dem Laufflächenabschnitt 16 bzw. dessen umfänglichen Segmenten 32, 34 zu verursachen.

Der Laufflächenabschnitt 16 kann im Sinne der Erfindung also sowohl translatorisch als auch schwenkbar (am Beispiel von Figur 21c illustriert) in axialer Richtung A gegenüber dem Initialmontageabschnitt 20 über die Betätigungseinrichtung 162 bewegbar sein.

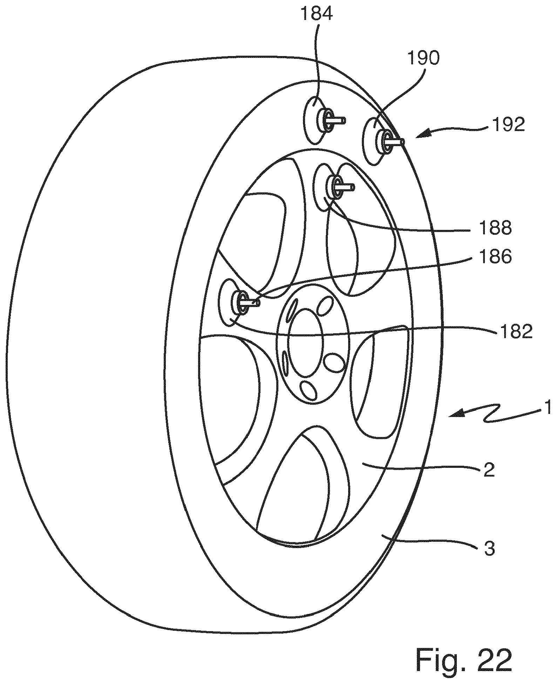

Wie in Figur 22 illustriert, können Saugnäpfe 182, 184 verwendet werden, um den Aufsatz 14 zu befestigen. Denkbar ist insbesondere auch, dass der Initialmontageabschnitt 20 ausgebildet ist, um an dem Fahrzeugrad 1, insbesondere im Bereich des Lochkreises 4 der Felge 2 des Fahrzeugrads 1 mittels Saugnäpfen 182 befestigt zu werden. Hierzu sind vorteilhafterweise Saugnäpfe 182 vorgesehen, die ausgebildet sind, um an der Felge 2 über Unterdruck zu haften. Zur Anbringung des Initialmontageabschnitts 20 können die Saugnäpfe 182 stiftartige Fortsätze 186, insbesondere mit Gewinde, umfassen. Zusätzlich oder alternativ kann der Laufflächenabschnitt 16 über Saugnäpfe 182 an der Felge 2 und/oder über weitere Saugnäpfe 184 am Reifen 3 befestigt werden.

Denkbar ist insbesondere auch, dass der Initialmontageabschnitt 20 ausgebildet ist, um an dem Fahrzeugrad 1, insbesondere im Bereich des Lochkreises 4 der Felge 2 des Fahrzeugrads 1 mittels einer stoffschlüssigen Verbindung, insbesondere einer klebenden Verbindung, befestigt zu werden. Eine stoffschlüssige bzw. klebende Verbindung kann insbesondere über mit Klebstoff beschichtete Saugnäpfe 188 realisiert sein, wobei die mit Klebstoff beschichteten Saugnäpfe 188 nicht zwingend einen Unterdruck halten müssen. Denkbar ist auch, dass ein sich mit dem Gummi des Reifens 3 verbindendes Mittel eingesetzt wird. Insbesondere können Saugnäpfe 190 mit einem derartigen Mittel beschichtet sein. Die Saugnäpfe 190 können dann eine stoffschlüssige Verbindung mit dem Reifen eingehen, basierend auf einer chemischen Reaktion mit dem Reifen 3.

Die Saugnäpfe 184, 190 können zum einen zur Befestigung des Aufsatzes 14 an dem Fahrzeugrad 1 genutzt werden und zum anderen, um den Reifen 3 an dem fest mit dem Fahrzeugrad 1 verbundenen Aufsatz 14 zu fixieren, damit dieser bei der Fahrt fest gehalten ist und nicht von der Felge 2 gelangen kann.

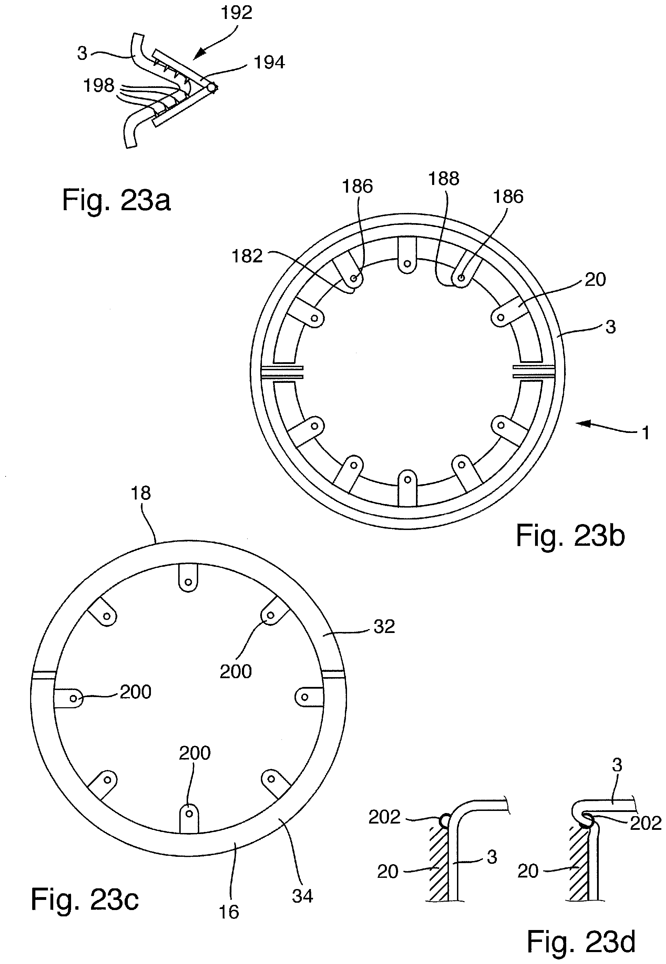

Im Sinne der Erfindung ist generell, wenn der Aufsatz 14 eine Reifenhalteeinrichtung 192 aufweist, die ausgebildet ist, um den Reifen 3 an dem Aufsatz 14 zu halten. Eine mögliche derartige Reifenhalteeinrichtung 192 ist einer oder mehrere der oben genannten Saugnäpfe 184, 190 aus Figur 22. Eine weitere Möglichkeit einer derartigen Reifenhalteeinrichtung 192 ist in Figur 23a illustriert und durch eine Reifenfasseinrichtung 194, die ausgebildet ist, um in den Reifen 3 des Fahrzeugrads 1 einzugreifen und das Reifenmaterial zu klemmen, gegeben. Vorzugsweise weist die Reifenfasseinrichtung 194 hierzu zahnartige Vorsprünge 198 auf, die ausgebildet sind, um in das Material des Reifens 3 einzudringen.

Denkbar ist ein Aufsatz 14 für ein Fahrzeugrad 1 zur Ermöglichung eines Fahrbetriebs bei eingeschränkter Reifenfunktion mit einem Laufflächenabschnitt 16, der eine Lauffläche 18 des Aufsatzes 14 umfasst, wobei der Aufsatz 14 wenigstens eine Reifenfasseinrichtung 194 umfasst, die ausgebildet ist, um in den Reifen 3 des Fahrzeugrads 1 einzugreifen und das Reifenmaterial zu klemmen oder in den Reifen 3 des Fahrzeugrads 1 einzugreifen und das Reifenmaterial zu durchdringen.

Denkbar ist auch eine Ausgestaltung, wie sie in Figur 23b und c illustriert wird. Die Erfindung betrifft einen Aufsatz 14 für ein Fahrzeugrad 1 zur Ermöglichung eines Fahrbetriebs bei eingeschränkter Reifenfunktion mit einem Initialmontageabschnitt 20, der eine Anbringeinrichtung 198, insbesondere Saugnäpfe 182, 184, 188, 190, umfasst, mittels der er am Fahrzeugrad 1, insbesondere an der Felge 2, vorzugsweise im radial äußeren Bereich der Felge 2, anbringbar ist, wobei der Aufsatz einen Laufflächenabschnitt 16, der eine Lauffläche 18 des Aufsatzes 14 aufweist, umfasst, wobei der Laufflächenabschnitt 16 mit dem Initialmontageabschnitt 20 über eine Verbindungseinrichtung 200 (diese kann bspw. auch durch die oben beschriebene Betätigungseinrichtung 162 gebildet sein), verbindbar ist, wobei der Laufflächenabschnitt 16 vorzugsweise wenigstens eine Reifenfasseinrichtung 194 und/oder eine Reifenhalteeinrichtung 192 umfasst, vorzugsweise wobei der Laufflächenabschnitt 16 wenigstens zwei umfängliche Segmente 32, 34 umfasst.

Figur 23d illustriert eine weitere mögliche Variante einer Reifenfasseinrichtung 194. Die in Figur 23d gezeigte Variante umfasst hakenartige Fasselemente 202, die durch das Material des Reifens schwenkbar sind, um dieses zu fassen (Figur 23d rechts). Die hakenartigen Fasselemente 202 greifen in das Material des Reifens 3 des Fahrzeugrads 1 ein und durchdringen das Reifenmaterial.

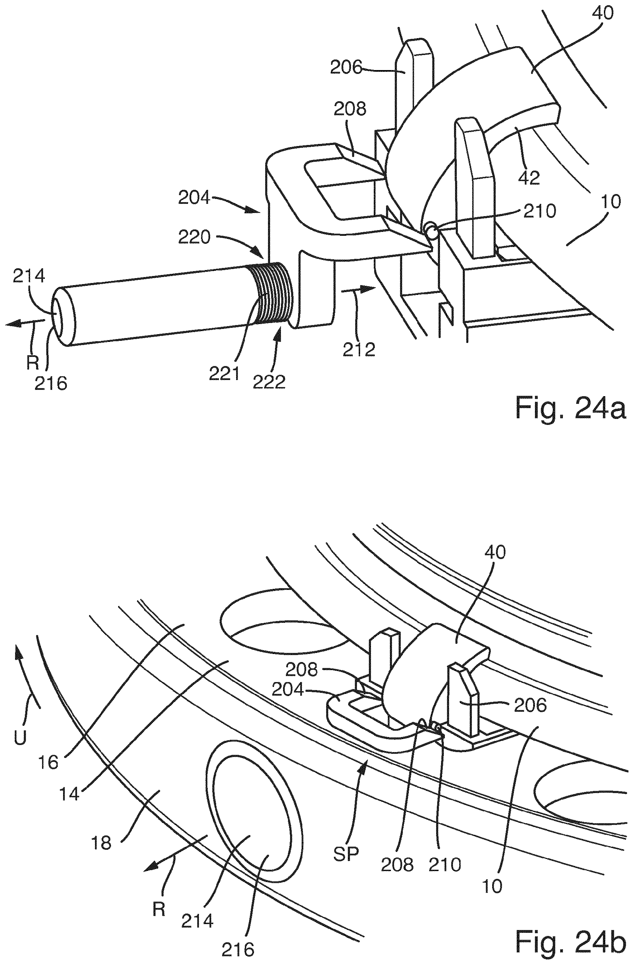

Die Figuren 24a und 24b zeigen einen Abschnitt eines Aufsatzes 14 der eine Spannmittelverriegelungseinrichtung 204 umfasst, die in eine Sicherungsposition SP bewegbar ist und ausgebildet ist, um in der Sicherungsposition SP das Spannmittel 40 derart, insbesondere durch eine formschlüssige Verriegelung (siehe Figur 24b), zu verriegeln, dass der Hakabschnitt 42 nicht aus seinem Hintergriff mit dem Abschnitt 10 der Felge 2 des Fahrzeugrads 1 bewegbar ist, solange die Spannmittelverriegelungseinrichtung 204 in der Sicherungsposition SP ist. In Figur 24a ist der Aufsatz nur teilweise dargestellt, insbesondere ist der Laufflächenabschnitt nicht gezeigt, um die Ausbildung der Spannmittelverriegelungseinrichtung 204 und des Spannmittels 40 besser sichtbar zu machen.

Die Verriegelung in der Sicherungsposition SP ist im vorliegenden Beispiel dadurch gewährleistet, dass eine bewegbare Spannfläche 208 der Spannmittelverriegelungseinrichtung 204 einen Vorsprung 210, der im vorliegenden Beispiel zapfenförmig ausgebildet ist, formschlüssig hintergreift. Die Spannfläche 208 kann jedoch auch einen anderen Teil des Spannmittels 40 formschlüssig hintergreifen. Im vorliegenden Beispiel steht der zapfenförmige Vorsprung 210 seitlich vom Spannmittel 40 ab. Derartige Vorsprünge 210 und Spannflächen 208 sind beidseitig des Spannmittels 40 vorhanden.

Der Aufsatz 14 kann generell auch eine Reifenverdrängeinrichtung 206 aufweisen, wie sie in Figur 24 gezeigt ist. Diese dient dazu, den Reifen 3 vom Felgenhorn 10 abzuheben, um ein Hintergreifen durch die Spannmittel 40 zu vereinfachen.

Die vorliegend gezeigte Spannmittelverriegelungseinrichtung 204 ist derart ausgebildet und gegenüber dem Spannmittel 40 angeordnet, dass die Spannmittelverriegelungseinrichtung 204, wenn sie in die Sicherungsposition SP bewegt wird (diese Bewegung ist durch den Pfeil 212 in Figur 24a illustriert), den Hakabschnitt 42 des Spannmittels 40, der sich im Hintergriff mit dem Abschnitt 10, 11 der Felge 2 befindet, zusätzlich gegen den Abschnitt 10, 11 der Felge 2 spannt. Dies geschieht im vorliegenden Beispiel dadurch, dass die Spannflächen 208 derart abgeschrägt ausgebildet und angeordnet sind, dass wenn sich die Spannmittelverriegelungseinrichtung 204 bzw. deren Spannflächen 208 nach radial innen bewegt bzw. bewegen, diese das Spannmittel 40 über die Vorsprünge 210 weiter in die Hintergriffstellung spannt bzw. spannen.

Die Bewegung der Spannmittelverriegelungseinrichtung 204 bzw. deren Spannflächen 208 kann über einen Betätigungsabschnitt 214 realisiert sein. Wobei der Betätigungsabschnitt 214 derart mit der Spannmittelverriegelungseinrichtung 204 gekoppelt sein kann, dass die Spannmittelverriegelungseinrichtung 204 bei Betätigung, insbesondere Druckbeaufschlagung, des Betätigungsabschnitts 214 in die Sicherungsposition SP bewegt wird.

Vorzugsweise ist der Betätigungsabschnitt 214 in der Lauffläche 18 angeordnet.

Vorzugsweise weißt der Betätigungsabschnitt 214 eine Kontaktfläche 216 auf, die aus einem Gummimaterial besteht oder ein Gummimaterial umfasst. Vorzugsweise ist die Kontaktfläche 216 in der Lauffläche 18 angeordnet und derart ausgebildet, dass sie beim Kontakt mit der Fahrbahn derart verschleißt bzw. abgetragen wird, dass sie bündig mit der Lauffläche 18 verläuft.

Der Betätigungsabschnitt 214 ist vorzugsweise über einen variablen Abschnitt 220 mechanisch mit der Spannmittelverriegelungseinrichtung 204 gekoppelt. Insbesondere kann der variable Abschnitt 220 in seiner radialen Erstreckung veränderbar sein. Dies ist im Beispiel von Figur 24a durch einen variablen Abschnitt 220 mit rillenartigen Vorsprüngen 221 realisiert, die in eine entsprechende Ausnehmung 222 an der Spannmittelverriegelungseinrichtung 204 einschiebbar sind.

Die Funktion der Spannmittelverriegelungseinrichtung 204 ist folgendermaßen: nachdem oder während die Spannmittel 40 das Felgenhorn 10 hintergriffen haben wird der Aufsatz 14 gedreht und die Lauffläche 18 rollt über die Fahrbahn ab. Dabei kontaktiert der Betätigungsabschnitt 214 die Fahrbahn. Der Betätigungsabschnitt 214 wird dadurch nach radial innen bewegt. Die Bewegung des Betätigungsabschnitts 214 wird durch die mechanische Kopplung mit der Spannmittelverriegelungseinrichtung 204 auf die Spannmittelverriegelungseinrichtung 204 übertragen. Diese bewegt sich nach radial innen. Dabei hintergreifen die Spannflächen 208 die Vorsprünge 210 an dem Spannmittel 40. Die Spannflächen 208 drängen dabei die Vorsprünge 210, vorliegend in axialer Richtung A, wodurch über die Vorsprünge 210, die mit dem Spannmittel 40 verbunden sind, das Spannmittel 40 gegen das Felgenhorn 10 verspannt wird. Hierdurch wird das Spannmittel 40 formschlüssig verriegelt und gleichzeitig, insbesondere dessen Hakabschnitt 42 gegen das Felgenhorn 10 gespannt. Das Spannmittel 40 kann aus seiner Hintergriffstellung mit dem Felgenhorn 10 nicht mehr herausschwenken.

Die Spannmittelverriegelungseinrichtung 204 kann jedoch auch auf verschiedene andere Arten bewegbar sein, insbesondere kann die Spannmittelverriegelungseinrichtung 204 manuell bewegbar sein. Vorzugsweise rastet die Spannmittelverriegelungseinrichtung 204 in der Sicherungsposition SP ein. Denkbar ist auch, dass die Spannmittelverriegelungseinrichtung 204 in die Sicherungsposition SP gespannt, insbesondere federgespannt, ist.

Obenstehend wurden Spannmittel 40, der Verspannmechanismus 52 sowie die Spannmittelverriegelungseinrichtung 204 in verschiedenen Ausbildungen beschrieben. Diese Ausführungen beziehen sich insbesondere auf die bisher beschriebenen Ausführungsformen des erfindungsgemäßen Aufsatzes 14.

Denkbar ist auch ein Aufsatz 14, der einen Grundkörper mit einer Lauffläche 18 aufweist, wobei der Aufsatz 14 zusätzlich eine oder mehrere Ausführungsformen der bisher beschriebenen Spannmittel 40, insbesondere und eine oder mehrere Ausführungsformen des Verspannmechanismus 52, vorzugsweise und eine oder mehrere Ausführungsformen der Spannmittelverriegelungseinrichtung 204 umfasst.

## Patentansprüche

1. Aufsatz (14) für ein Fahrzeugrad (1) zur Ermöglichung eines Fahrbetriebs bei eingeschränkter Reifenfunktion, mit einem Laufflächenabschnitt (16), der eine Lauffläche (18) des Aufsatzes (14) umfasst, und mit einem Initialmontageabschnitt (20), der bei der Montage des Aufsatzes (14) radial innerhalb der Lauffläche (18) angeordnet und dazu eingerichtet ist, an dem Fahrzeugrad (1) im Bereich eines Lochkreises (4) einer Felge (2) des Fahrzeugrads (1) befestigt zu werden, wobei der Laufflächenabschnitt (16) mittels einer Befestigungseinrichtung (28, 30) am Initialmontageabschnitt (20) lösbar befestigt ist, und wobei die Befestigungseinrichtung (28, 30) derart ausgebildet ist, dass sich der Laufflächenabschnitt (16) beim Befestigen an dem Initialmontageabschnitt (20) in einer axialen Richtung (A) zur Felge (2) hin bewegt,
**dadurch gekennzeichnet, dass** der Laufflächenabschnitt (16) wenigstens ein Spannmittel (40) umfasst, das dazu ausgebildet ist, mit einem Hakabschnitt (42) einen Abschnitt (10, 11), insbesondere ein Felgenhorn (10), der Felge (2) des Fahrzeugrads (1) zu hintergreifen.

2. Aufsatz (14) nach Anspruch 1, **dadurch gekennzeichnet, dass** der Initialmontageabschnitt (20) dazu eingerichtet ist, über einen formschlüssigen Hintergriff im Bereich des Lochkreises (4) der Felge (2) und/oder über eine, vorzugsweise kraftschlüssige, Verbindung im Bereich des Lochkreises (4) der Felge (2) am Fahrzeugrad (1) im Bereich des Lochkreises (4) der Felge (2) befestigt zu werden.

3. Aufsatz (14) nach Anspruch 1 oder 2, **dadurch gekennzeichnet, dass** der Initialmontageabschnitt (20) ausgebildet ist, um über einen formschlüssigen Hintergriff einer Greifeinrichtung (22) und/oder einen kraftschlüssigen Eingriff der Greifeinrichtung (22) mit einer, vorzugsweise kreisrunden, Öffnung (13) in der Felge (2), die im Bereich des Lochkreises (4) angeordnet ist, am Fahrzeugrad befestigt zu werden, wobei die Öffnung (13) zu Löchern (7), die zur Aufnahme von Radschrauben bzw. Stehbolzen in der Felge (2) vorgesehen sind, beabstandet in der Felge (2) angeordnet ist, vorzugsweise wobei die Öffnung eine Mittenöffnung (6) der Felge (2) ist oder zu einer Drehachse (5) der Felge (2) beabstandet ist.

4. Aufsatz (14) nach Anspruch 3, **dadurch gekennzeichnet, dass** die Greifeinrichtung (22) einen erweiterbaren Abschnitt (24) umfasst, vorzugsweise der ausgebildet ist, um die Öffnung (13) im Bereich des Lochkreises (4) zu hintergreifen.

5. Aufsatz (14) nach einem der Ansprüche 3 oder 4, **dadurch gekennzeichnet, dass** die Greifeinrichtung (22) einen komprimierbaren Abschnitt (90) umfasst, der ausgebildet ist, um im komprimierten Zustand durch die Öffnung (13) im Bereich des Lochkreises (4) geführt zu werden und sich in einen unkomprimierten Zustand zu erweitern, wenn er durch die Öffnung (13) geführt ist.

6. Aufsatz (14) nach einem der Ansprüche 3 bis 5, **dadurch gekennzeichnet, dass** jedenfalls ein Teil der Greifeinrichtung (22) unlösbar mit dem Initialmontageabschnitt (20) verbunden ist.

7. Aufsatz (14) nach einem der voranstehenden Ansprüche, **dadurch gekennzeichnet, dass** der Initialmontageabschnitt (20) dazu ausgebildet ist, mittels einer Klemmeinrichtung (140) an Radschrauben (15) des Fahrzeugrads (1) befestigt zu werden, wobei die Klemmeinrichtung (140) dazu ausgebildet ist, klemmend an einer Radschraube (140) anzugreifen und diese zu fassen oder klemmend an wenigstens zwei Radschrauben (15) gemeinsam anzugreifen und diese zu fassen.

8. Aufsatz (14) nach einem der Ansprüche 1 bis 7, **dadurch gekennzeichnet, dass** der Laufflächenabschnitt (16) derart mit dem Initialmontageabschnitt (20) verbindbar ist, dass er über eine, vorzugsweise pneumatische und/oder federvorgespannte, Betätigungseinrichtung (162) in axialer Richtung (A) gegenüber dem Initialmontageabschnitt (20) bewegbar ist.

9. Aufsatz (14) nach einem der voranstehenden Ansprüche, **dadurch gekennzeichnet, dass** der Laufflächenabschnitt (16), insbesondere in einer Umfangsrichtung (U), mehrteilig ausgebildet ist, wobei der Laufflächenabschnitt (16) vorzugsweise wenigstens zwei, insbesondere voneinander lösbare und/oder zueinander verschwenk- oder verschiebbare umfängliche Segmente (32, 34) umfasst.

10. Aufsatz (14) nach einem der voranstehenden Ansprüche 1 bis 6, **dadurch gekennzeichnet, dass** der Laufflächenabschnitt (16) einen in Umfangsrichtung (U) durchgängig ausgebildeten Innenabschnitt (54) umfasst, der radial innen liegend von einem Außenabschnitt (56) angeordnet ist, wobei der Außenabschnitt (56) in Umfangsrichtung (U) mit einer Unterbrechung (58) ausgebildet ist und wobei der Außenabschnitt (56) weiterhin einen Einsatzabschnitt (60) umfasst, der, wenn der Aufsatz (14) im am Fahrzeugrad (2) montierten Zustand ist, in der Unterbrechung (58) derart aufgenommen ist, dass der Außenabschnitt (56) eine geschlossene kreisförmige Lauffläche (18) aufweist.

11. Aufsatz (14) nach dem voranstehenden Anspruch, **dadurch gekennzeichnet, dass** der Aufsatz (14) einen Verspannmechanismus (52) mit einem Kontaktabschnitt (50) umfasst, der dazu ausgebildet ist, das Spannmittel (40) zu betätigen und den Hakabschnitt (42) in Hintergriff mit dem Abschnitt (10, 11) der Felge (2), vorzugsweise dem Felgenhorn (10), zu bringen, wenn der Kontaktabschnitt (50), betätigt, insbesondere mit Druck beaufschlagt, wird.

12. Aufsatz (14) nach dem voranstehenden Anspruch, **dadurch gekennzeichnet, dass** der Verspannmechanismus (52) dazu ausgebildet ist, mit dem Kontaktabschnitt (50) bei am Fahrzeugrad (1) angebrachtem Aufsatz (14) und sich drehendem Fahrzeugrad (1) die Fahrbahn (F) zu kontaktieren und dadurch den Kontaktabschnitt (50) zu betätigen, insbesondere mit Druck zu beaufschlagen, vorzugsweise wobei der Kontaktabschnitt (50) räumlich, insbesondere in axialer Richtung gesehen, in der Lauffläche (18) des Aufsatzes (14) angeordnet ist und vorzugsweise wobei der Kontaktabschnitt (50) in einem ausgefahrenen Zustand in Umfangsrichtung (U) absatzfrei mit der Lauffläche (18) des Aufsatzes (14) verläuft.

13. Aufsatz (14) nach dem Anspruch 11, **dadurch gekennzeichnet, dass** der Verspannmechanismus (52) dazu ausgebildet ist, mit dem Kontaktabschnitt (50) das Fahrzeugrad (1), insbesondere die Felge (2), oder den Initialmontageabschnitt (20) zu kontaktieren, wenn der Laufflächenabschnitt (16) am Initialmontageabschnitt (20) befestigt wird oder im am Initialmontageabschnitt (20) befestigten Zustand auf den Initialmontageabschnitt (20) zu bewegt wird, und dadurch den Kontaktabschnitt (50) zu betätigen, insbesondere mit Druck zu beaufschlagen, vorzugsweise wobei der Kontaktabschnitt (50) auf der der Felge (2) zugewandten Seite des Aufsatzes (14) angeordnet ist.

14. Aufsatz (14) nach einem der voranstehenden Ansprüche, **dadurch gekennzeichnet, dass** der Hakabschnitt (42) des Spannmittels (40) in axialer Richtung (A) gesehen nach radial innen, vorzugsweise linear oder bogenförmig, abfallend ausgebildet ist, wobei das Spannmittel (40) derart ausgebildet ist, dass sich der Hakabschnitt (42) nach radial innen bewegt, insbesondere verschiebt, wenn das Spannmittel (40) betätigt wird und das Spannmittel (40) sich auf die Felge (2), insbesondere auf das Felgenhorn (10), zubewegt, und dass durch die Bewegung des Hakabschnitts (42) der Laufflächenabschnitt (16) in axialer Richtung (A) zur Felge (2) hin gedrängt wird.

15. Aufsatz (14) nach einem der voranstehenden Ansprüche, **dadurch gekennzeichnet, dass** der Aufsatz (14) eine Spannmittelverriegelungseinrichtung (204) umfasst, die in eine Sicherungsposition (SP) bewegbar ist und dazu ausgebildet ist, in der Sicherungsposition (SP) das Spannmittel (40) derart, insbesondere durch eine formschlüssige Verriegelung, zu verriegeln, dass der Hakabschnitt (42) nicht aus seinem Hintergriff mit dem Abschnitt (10, 11) der Felge (2) des Fahrzeugrads (1) bewegbar ist, solange die Spannmittelverriegelungseinrichtung (204) in der Sicherungsposition (SP) ist.

16. Aufsatz (14) nach dem voranstehenden Anspruch, **dadurch gekennzeichnet, dass** die Spannmittelverriegelungseinrichtung (204) derart ausgebildet und gegenüber dem Spannmittel (40) angeordnet ist, dass die Spannmittelverriegelungseinrichtung (204), wenn sie in die Sicherungsposition (SP) bewegt wird, den Hakabschnitt (42) des Spannmittels (40), der sich im Hintergriff mit dem Abschnitt (10, 11) der Felge (2) befindet, zusätzlich gegen den Abschnitt (10, 11) der Felge (2) spannt.

17. System aus einem Aufsatz (14) und einer Felge (2) eines Fahrzeugrads (1), **dadurch gekennzeichnet, dass** der Aufsatz (14) gemäß einem der voranstehenden Ansprüche ausgebildet ist und die Felge (2) wenigstens eine Öffnung (13), vorzugsweise mehrere Öffnungen (13), aufweist, die im Bereich des Lochkreises (4) in der Felge (2) angeordnet ist bzw. sind, und wobei die Öffnung(en) (13) zu den Löchern (7), die zur Aufnahme von Radschrauben bzw. Stehbolzen vorgesehen sind, vorzugsweise auch zu der Mittenöffnung (6) der Felge (2), beabstandet angeordnet ist bzw. sind.

18. System aus einem Aufsatz (14) und einer Felge (2) nach dem voranstehenden Anspruch, **dadurch gekennzeichnet, dass** bei Vorhandensein mehrerer Öffnungen (13) Mittelpunkte (99) der Öffnungen (13) beabstandet, vorzugsweise nach radial außen beabstandet, zu einem Kreis (100) angeordnet sind, der durch Mittelpunkte (101) der Löcher (7), die zur Aufnahme von Radschrauben bzw. Stehbolzen vorgesehen sind, verläuft und/oder dass die Mittelpunkte (99) der Öffnungen (13) beabstandet, vorzugsweise nach radial innen beabstandet, zu einem Kreis (102) angeordnet sind, der den kleinsten Kreis bildet, der sämtliche Löcher (7), die zur Aufnahme von Radschrauben bzw. Stehbolzen vorgesehen sind, umschreibt.

## Claims

1. Attachment (14) for a vehicle wheel (1) for enabling driving operation with reduced tyre function, having a tread portion (16) which comprises a tread surface (18) of the attachment (14), and having an initial mounting portion (20) which, on mounting of the attachment (14), is arranged radially inwards from the tread surface (18) and is adapted to be fastened to the vehicle wheel (1) in the region of a bolt circle (4) of a rim (2) of the vehicle wheel (1), wherein the tread portion (16) is fastened in a detachable manner to the initial mounting portion (20) by means of a fastening device (28, 30), and wherein the fastening device (28, 30) is so configured that the tread portion (16) moves in an axial direction (A) towards the rim (2) on fastening to the initial mounting portion (20),
**characterised in that** the tread portion (16) comprises at least one bracing means (40) which is configured to engage with a hook portion (42) behind a portion (10, 11), in particular a rim flange (10), of the rim (2) of the vehicle wheel (1).

2. Attachment (14) according to claim 1, **characterised in that** the initial mounting portion (20) is adapted to be fastened to the vehicle wheel (1) in the region of the bolt circle (4) of the rim (2) *via* form-fitting engagement in the region of the bolt circle (4) of the rim (2) and/or *via* a connection, preferably a friction-based connection, in the region of the bolt circle (4) of the rim (2).

3. Attachment (14) according to claim 1 or 2, **characterised in that** the initial mounting portion (20) is configured to be fastened to the vehicle wheel *via* form-fitting engagement of a grip device (22) and/or friction-based engagement of the grip device (22) with an opening (13), preferably a circular opening, in the rim (2), which opening is arranged in the region of the bolt circle (4), wherein the opening (13) is arranged in the rim (2) spaced apart from holes (7) which are provided in the rim (2) for receiving wheel bolts, or stay bolts, preferably wherein the opening is a centre opening (6) of the rim (2) or is spaced apart from an axis of rotation (5) of the rim (2).

4. Attachment (14) according to claim 3, **characterised in that** the grip device (22) comprises an expandable portion (24), which is preferably configured to engage behind the opening (13) in the region of the bolt circle (4).

5. Attachment (14) according to either claim 3 or claim 4, **characterised in that** the grip device (22) comprises a compressible portion (90) which is configured to be guided, in the compressed state, through the opening (13) in the region of the bolt circle (4) and to expand into an uncompressed state when it has been guided through the opening (13).

6. Attachment (14) according to any one of claims 3 to 5, **characterised in that** at least a portion of the grip device (22) is connected to the initial mounting portion (20) in an undetachable manner.

7. Attachment (14) according to any one of the preceding claims, **characterised in that** the initial mounting portion (20) is configured to be fastened to wheel bolts (15) of the vehicle wheel (1) by means of a clamping device (140), wherein the clamping device (140) is configured to engage a wheel bolt (140) in a clamping manner and to grasp it or to engage at least two wheel bolts (15) jointly in a clamping manner and to grasp them.

8. Attachment (14) according to any one of claims 1 to 7, **characterised in that** the tread portion (16) is configured to be connected to the initial mounting portion (20) in such a manner that it is movable in the axial direction (A) relative to the initial mounting portion (20) *via* an actuating device (162), preferably a pneumatic and/or spring-biased actuating device.

9. Attachment (14) according to any one of the preceding claims, **characterised in that** the tread portion (16) is in multi-part form, in particular in a peripheral direction (U), wherein the tread portion (16) comprises preferably at least two peripheral segments (32, 34) which in particular are detachable from one another and/or pivotable or displaceable relative to one another.

10. Attachment (14) according to any one of the preceding claims 1 to 6, **characterised in that** the tread portion (16) comprises an inner portion (54) which is continuous in the peripheral direction (U) and is arranged radially inwards from an outer portion (56), wherein the outer portion (56) is provided with a gap (58) in the peripheral direction (U), and wherein the outer portion (56) further comprises an insert portion (60) which, when the attachment (14) is in the mounted state on the vehicle wheel (2), is received in the gap (58) in such a manner that the outer portion (56) has a closed circular tread surface (18).

11. Attachment (14) according to the preceding claim, **characterised in that** the attachment (14) comprises a bracing mechanism (52) having a contact portion (50) which is configured to actuate the bracing means (40) and bring the hook portion (42) into engagement behind the portion (10, 11) of the rim (2), preferably the rim flange (10), when the contact portion (50) is actuated, in particular subjected to pressure.

12. Attachment (14) according to the preceding claim, **characterised in that** the bracing mechanism (52) is configured to contact the road surface (F) with the contact portion (50) when the attachment (14) is attached to the vehicle wheel (1) and the vehicle wheel (1) is turning and thereby to actuate the contact portion (50), in particular subject it to pressure, preferably wherein the contact portion (50) is arranged spatially, in particular when seen in the axial direction, in the tread surface (18) of the attachment (14) and preferably wherein the contact portion (50), in a deployed state, extends in the peripheral direction (U) flush with the tread surface (18) of the attachment (14).

13. Attachment (14) according to claim 11, **characterised in that** the bracing mechanism (52) is configured to contact the vehicle wheel (1), in particular the rim (2), or the initial mounting portion (20) with the contact portion (50) when the tread portion (16) is fastened to the initial mounting portion (20) or, in the state fastened to the initial mounting portion (20), is moved towards the initial mounting portion (20), and thereby to actuate the contact portion (50), in particular subject it to pressure, preferably wherein the contact portion (50) is arranged on the side of the attachment (14) that faces the rim (2).

14. Attachment (14) according to any one of the preceding claims, **characterised in that** the hook portion (42) of the bracing means (40), when seen in the axial direction (A), is configured to slope radially inwards, preferably in a linear or arcuate manner, wherein the bracing means (40) is so configured that the hook portion (42) moves, in particular is displaced, radially inwards when the bracing means (40) is actuated and the bracing means (40) moves towards the rim (2), in particular towards the rim flange (10), and that the tread portion (16) is urged in the axial direction (A) towards the rim (2) as a result of the movement of the hook portion (42).

15. Attachment (14) according to any one of the preceding claims, **characterised in that** the attachment (14) comprises a bracing means locking device (204) which is adapted to be moved into a securing position (SP) and is configured, in the securing position (SP), to lock the bracing means (40), in particular by form-fitting locking, in such a manner that the hook portion (42) cannot be moved out of engagement behind the portion (10, 11) of the rim (2) of the vehicle wheel (1) as long as the bracing means locking device (204) is in the securing position (SP).

16. Attachment (14) according to the preceding claim, **characterised in that** the bracing means locking device (204) is so configured and arranged relative to the bracing means (40) that the bracing means locking device (204), when it is moved into the securing position (SP), additionally braces the hook portion (42) of the bracing means (40), which is in engagement behind the portion (10, 11) of the rim (2), against the portion (10, 11) of the rim (2).

17. System comprising an attachment (14) and a rim (2) of a vehicle wheel (1), **characterised in that** the attachment (14) is configured according to any one of the preceding claims and the rim (2) has at least one opening (13), preferably multiple openings (13), which is or are arranged in the region of the bolt circle (4) in the rim (2), and wherein the opening(s) (13) is or are arranged spaced apart from the holes (7) which are provided for receiving wheel bolts, or stay bolts, preferably also from the centre opening (6) of the rim (2).

18. System comprising an attachment (14) and a rim (2) according to the preceding claim, **characterised in that**, where multiple openings (13) are present, mid-points (99) of the openings (13) are arranged spaced apart, preferably radially outwardly spaced apart, from a circle (100) which extends through mid-points (101) of the holes (7) provided for receiving wheel bolts, or stay bolts, and/or **in that** the mid-points (99) of the openings (13) are arranged spaced apart, preferably radially inwardly spaced apart, from a circle (102) which forms the smallest circle which circumscribes all the holes (7) provided for receiving wheel bolts, or stay bolts.

## Revendications

1. Pièce rapportée (14) pour une roue (1) de véhicule pour permettre une conduite dans des conditions de fonctionnement restreintes de pneu, comprenant une section de bande de roulement (16) qui comprend une bande de roulement (18) de la pièce rapportée (14), et comprenant une section de montage initial (20), qui lors du montage de la pièce rapportée (14) est disposée radialement à l'intérieur de la bande de roulement (18) et conçue pour se fixer sur la roue (1) de véhicule dans la zone d'un cercle de perçage (4) d'un jante (2) de la roue (1) de véhicule, la section de bande de roulement (16) étant fixée amovible sur la section de montage initial (20) au moyen d'un dispositif de fixation (28, 30), et le dispositif de fixation (28, 30) est conçu de telle sorte que la section de bande de roulement (16) se déplace dans une direction axiale (A) vers la jante (2) lors de la fixation sur la section de montage initial (20),
**caractérisée en ce que** la section de bande de roulement (16) comprend au moins un moyen de serrage (40) qui est conçu pour venir se bloquer par derrière sur une section (10, 11), en particulier un rebord (10) de la jante (2) de la roue (1) de véhicule, au moyen d'une partie crochet (42).

2. Pièce rapportée (14) selon la revendication 1, **caractérisée en ce que** la section de montage initial (20) est conçue pour être fixée par un blocage arrière par complémentarité de forme dans la zone du cercle de perçage (4) de la jante (2) et/ou par une liaison de préférence à force, dans la zone du cercle de perçage (4) de la jante (2) sur la roue (1) de véhicule dans la zone du cercle (4) de perçage de la jante (2).

3. Pièce rapportée (14) selon la revendication 1 ou la revendication 2, **caractérisée en ce que** la section de montage initial (20) est conçue pour être fixée sur la roue de véhicule par un blocage arrière par complémentarité de forme d'un dispositif de blocage (22) et/ou par une mise en prise à force du dispositif de mise en prise (22) dans une ouverture (13), de préférence circulaire, dans la jante (2) qui est disposé dans la zone du cercle de perçage (4), l'ouverture (13) étant ménagée à distance des trous (7) dans la jante (2), lesquels servent à loger les vis ou les boulons de roue dans la jante (2), de préférence l'ouverture étant une ouverture centrale (6) de la jante (2) ou étant à distance d'un axe de rotation (5) de la jante (2).

4. Pièce rapportée (14) selon la revendication 3, **caractérisée en ce que** le dispositif de blocage (22) comprend une section (24) extensible, de préférence qui est conçu pour venir se bloquer par l'arrière dans l'ouverture (13) dans la zone du cercle de perçage (4).

5. Pièce rapportée (14) selon l'une quelconque des revendications 3 ou 4, **caractérisée en ce que** le dispositif de blocage (22) comprend une section (90) pouvant être comprimée qui est conçue pour être amenée, lorsqu'elle est comprimée, dans l'ouverture (13) dans la zone du cercle de perçage (4) et pour s'élargir lorsqu'elle est amenée dans l'ouverture (13).

6. Pièce rapportée (14) selon l'une quelconque des revendications 3 à 5, **caractérisée en ce qu'**une partie du dispositif de blocage (22) est toujours reliée à demeure à la section de montage initial (20).

7. Pièce rapportée (14) selon l'une quelconque des revendications précédentes, **caractérisée en ce que** la section de montage initial (20) est conçue pour se fixer au moyen d'un dispositif de serrage (140) sur les vis (15) de la roue (1) du véhicule, le dispositif de serrage (140) est conçu pour venir se serrer sur une vis (140) de roue et la fixer ou venir sur au moins deux vis (15) de roue et les fixer.

8. Pièce rapportée (14) selon l'une quelconque des revendications 1 à 7, **caractérisée en ce que** la section de bande de roulement (16) peut être reliée à la section de montage initial (20) de manière à ce qu'elle puisse être déplacée par un dispositif d'actionnement (162) de préférence pneumatique et/ou précontraint par ressort dans la direction axiale (A) par rapport à la section de montage initial (20).

9. Pièce rapportée (14) selon l'une quelconque des revendications précédentes, **caractérisée en ce que** la section de bande de roulement (16) est conçue en plusieurs parties, en particulier sur la circonférence, la section de bande de roulement (16) comprenant de préférence au moins deux segments (32, 34) circonférentiels pouvant notamment se séparer l'un de l'autre et/ou pivoter l'un par rapport à l'autre ou se déplacer l'un par rapport à l'autre.

10. Pièce rapportée (14) selon l'une quelconque des revendications précédentes 1 à 6, **caractérisée en ce que** la section de bande de roulement (16) comprenant une section intérieure (54) conçue en continu sur la circonférence (U) laquelle est disposée à l'intérieur radialement par rapport à une section extérieure (56), la section extérieure (56) étant conçue sur la circonférence (U) avec une interruption (58) et la section extérieure (56) comprend une section d'insertion (60), qui, lorsque la partie rapportée (14) est montée sur la roue (2) de véhicule, est logée dans l'interruption (58) de manière à ce que la section extérieure (56) présente une bande de roulement (18) circulaire fermée.

11. Pièce rapportée (14) selon une revendication précédente, **caractérisée en ce que** la partie rapportée (14) comprend un mécanisme de serrage (52) doté d'une section de contact (50) qui est conçu pour actionner le moyen de serrage (40) et amener la section crochet (42) à se bloquer sur l'arrière avec la section (10, 11) de la jante (2), de préférence le rebord de jante (10) lorsque la section de contact (50) est actionnée ou en particulier lorsqu'elle est soumise à une pression.

12. Pièce rapportée (14) selon une revendication précédente, **caractérisée en ce que** le mécanisme de serrage (52) est conçu pour entrer en contact avec la bande de roulement (F) tournant sur la roue (1) et avec la section de contact (50) lorsque la partie rapportée (14) est placée sur la roue (1) et ainsi actionner la section de contact (50), en particulier pour la soumettre à une pression, de préférence la section de contact (50) est disposée spatialement, en particulier lorsqu'elle est vue dans le sens axial, dans la bande de roulement (18) de la pièce rapportée (14) et de préférence la section de contact (50) s'étendant, lorsqu'elle est sortie, sur la circonférence (U) sans la pièce rapportée avec la bande de roulement (18) de la pièce rapportée (14).

13. Pièce rapportée (14) selon la revendication 11, **caractérisée en ce que** le mécanisme de serrage (52) est conçu pour entrer en contact avec la section de contact (50), la roue (1) de véhicule, en particulier la jante (2) ou avec la section de montage initial (20), lorsque la section de bande de roulement (16) est fixée à la section de montage initial (20) ou lorsqu'il est fixé à la section de montage initial (20) pour se déplacer vers la section de montage initial (20), et ainsi actionner la section de contact (50), en particulier la soumettre à une pression, de préférence la section de contact (50) étant disposée que le côté de la partie rapportée (14) orienté vers la jante (2).

14. Pièce rapportée (14) selon l'une quelconque des revendications précédentes, **caractérisée en ce que** la section crochet (42) du moyen de serrage (40) lorsqu'elle est vue dans la direction axiale (A) est conçue en pente, de préférence linéaire ou arquée radialement vers l'intérieur, le moyen de serrage (40) étant conçu de telle sorte que la section crochet (42) se déplace radialement vers l'intérieur, en particulier se déplace lorsque le moyen de serrage (40) est actionné et que le moyen de serrage (40) se déplace sur la jante (2) en particulier sur le rebord (10) de la jante, et **en ce que** par le déplacement de la section crochet (42) la section de bande de roulement (16) est serrée dans la direction axiale (A) sur la jante (2).

15. Pièce rapportée (14) selon l'une quelconque des revendications précédentes, **caractérisée en ce que** la pièce rapportée (14) comprend un dispositif de verrouillage de moyen de serrage (204) qui peut se déplacer dans une position de fixation (SP) et qui est conçu pour verrouiller dans la position de fixation (SP) le moyen de serrage (40) en particulier par un dispositif de verrouillage par complémentarité de forme de telle sorte que la section crochet (42) ne puisse pas sortir de son blocage arrière avec la section (10, 11) de la jante (2) de la roue (1) de véhicule tant que le dispositif de verrouillage de moyen de serrage (204) se trouve dans la position de fixation (SP).

16. Pièce rapportée (14) selon la revendication précédente, **caractérisée en ce que** le dispositif de verrouillage de moyen de serrage (204) est disposé en regard du moyen de serrage (40) et est conçu de telle sorte que le dispositif de verrouillage de moyen de serrage (204), lorsqu'il se déplace dans la position de fixation (SP), serre la section crochet (42) du moyen de serrage (40), qui se trouve bloqué par l'arrière avec la section (10, 11) de la jante (2), en plus contre la section (10, 11) de la jante (2).

17. Système à partir d'une pièce rapportée (14) et d'une jante (2) d'une roue (1) de véhicule, **caractérisé en ce que** la pièce rapportée (14) est conçue selon l'une des revendications précédentes, et la jante (2) comporte au moins une ouverture (13), de préférence plusieurs ouvertures (13), qui est/sont ménagée(s) dans la zone du cercle de perçage (4) dans la jante (2) et la/les ouverture(s) (13) est/sont espacée(s) des trous (7) qui servent à loger les vis de roue ou les boulons de fixation, de préférence également de l'ouverture centrale (6) de la jante (2).

18. Système à partir d'une pièce rapportée (14) et d'une jante (2) selon la revendication précédente, **caractérisé en ce qu'**en présence de plusieurs ouvertures (13) des points médians (99) sont éloignés des ouvertures (13), de préférence éloignés vers l'extérieur radialement, par rapport à un cercle (100) qui s'étend par les points médians (101) des trous (7), qui servent à loger les vis de roue ou les boulons de fixation, et/ou **en ce que** les points médians (99) des ouvertures (13) sont éloignés de préférence vers l'intérieur radialement, par rapport à un cercle (102) qui forme le cercle le plus petit, qui décrit tous les trous (7) qui servent à loger les vis de roue ou les boulons de fixation.
